# EUROPEAN PATENT APPLICATION

(11) **EP 2 416 400 A1**
(43) Date of publication of application: **08.02.2012**
(21) Application number: 10758281.9
(22) Date of filing: 31.03.2010
(51) Int. Cl.: H01M 2/02, C25D 5/12, C25D 5/50, H01M 10/0525, H01M 10/0566

(54) **MATERIAL FOR METALLIC OUTER CASE FOR SECONDARY BATTERY UTILIZING NON-AQUEOUS ELECTROLYTE, METALLIC OUTER CASE, SECONDARY BATTERY, AND PROCESS FOR PRODUCTION OF MATERIAL FOR METALLIC OUTER CASE**

(30) Priority: 31.03.2009 JP 2009085746; 24.06.2009 JP 2009150099; 29.06.2009 JP 2009153746
(71) Applicant: Nippon Steel Corporation, Tokyo 100-8071 (JP)
(72) Inventor: NAKAZAWA, Makoto, Tokyo 100-8071 (JP); HAYASHI, Kimitaka, Tokyo 100-8071 (JP); TAKAHASHI, Takehiro, Tokyo 100-8071 (JP)
(74) Representative: Vossius & Partner
(86) International application number: PCT/JP2010/002372
(87) International publication number: WO 2010/113502

(57) **Abstract**

The material for metal cases of secondary batteries using a non-aqueous electrolyte includes a steel sheet; and a plated layer that has a Ni layer, and a Cu-Ni layer, which is disposed between the Ni layer and the steel sheet and is in contact with the Ni layer, and is in contact with the steel sheet.

## Description

### BACKGROUND OF THE INVENTION

### Field of the Invention

The present invention relates to a material for making metal cases for secondary batteries using a non-aqueous electrolyte and a method for manufacturing the material. In addition, the present invention relates to a metal case for a secondary battery made by forming the material for metal cases and a secondary battery made by inserting an anode, a cathode, and a separator, and pouring an electrolytic solution containing a non-aqueous electrolyte in the metal case.
Priorities are claimed on Japanese Patent Application No. 2009-085746, filed March 31, 2009, Japanese Patent Application No. 2009-150099, filed June 24, 2009, and Japanese Patent Application No. 2009-153746, filed June 29, 2009, the contents of which are incorporated herein by reference.

### Description of Related Art

In recent years, in accordance with the miniaturization and advanced performance of personal mobile devices, there has been demand for a secondary battery that has a small size, a light weight, and a high energy density, and can charge and discharge for a long time as a power supply for such devices. As a result, instead of alkali secondary batteries (aqueous secondary batteries) in the conventional technique, such as a nickel-cadmium battery or a nickel-hydrogen battery, non-aqueous electrolyte secondary batteries having a higher energy density and a higher power density, such as a lithium battery, are widely used. In addition, recently, lithium batteries are developed as a power supply for motors of motor-driven automobiles, such as a hybrid automobile or an electric automobile.

In order to manufacture non-aqueous electrolyte secondary batteries at a low cost, a low-priced and highly reliable material for outer cases is required. As the material for outer cases, generally, a steel sheet having Ni-plating on the surfaces thereof is used from the viewpoint of formability, weldability, corrosion resistance, strength, or the like. The material is manufactured into a battery can, such as a cylindrical can or a rectangular can, through forming, and an electrode group composed of an anode plate, a cathode plate, and a separator and an electrolyte are housed in the battery can. After that, a battery cap is fixed to the opening of the battery can through caulking so as to seal an outer case composed of the battery can and the battery cap. For the fixing through caulking, a step-forming is performed on the opening of the battery can. The battery cap is fixed through caulking through above the step portion (the opening side). In addition, there are cases in which scoring is performed on the bottom of the can so that the bottom acts as a safety valve when the internal pressure is too high.

When a steel sheet on which Ni plating has been performed in advance (a Ni-plated steel sheet) is used, there are cases in which the Ni plating is damaged during forming or scoring, and thus the steel sheet is exposed. Even when the steel sheet is not exposed, the thickness of the Ni plating is too thin, and therefore it is likely that Fe ions become liable to dissolve. On the other hand, when a steel sheet is subjected to forming and then Ni plating (Ni postplating), the plating thickness is not uniform, and therefore there are cases in which some portions in the vicinity of the bottom of the can have an extremely thin Ni plating. Furthermore, since the adhesiveness of the plating is poorer than that in the Ni-plated steel sheet, there are cases in which the Ni plating detaches during a step-forming, and thus the steel sheet is exposed. As such, in the Ni postplating, it is difficult to obtain the effect of the Ni plating, and therefore Fe ions become liable to dissolve.

Generally, in a lithium ion battery, the metal can is connected to the cathode. In this case, even when the Ni plating is damaged, it is less likely that Fe ions will dissolve while the lithium ion battery is in operation, considering the potential of the cathode. However, when a lithium ion battery is manufactured, the potential of the case is an uncharged carbon cathode potential with no lithium ions doped (3.2 V to 3.4 V vs. Li/Li⁺) during an aging process which begins when an electrode group and an electrolytic solution are housed in an outer case and ends when the lithium ion battery is charged. In addition, generally, the aging process is performed for about several days in order to make an electrolytic solution sufficiently diffuse into the anode, the cathode, and the separator so as to stabilize the charge and discharge properties in the initial stage. As a result, Fe ions dissolve from the damaged portions in the Ni plating. The Fe ions dissolve during the aging process precipitate and cause growth of metal (metallic iron) on the surface of the cathode when the battery is charged and discharged. Therefore, Fe ions dissolve through the damaged portions of the Ni plate. Since the Fe ions dissolved during the aging process precipitate and develop metal (metallic iron) on the surface of the anode when the battery is charged and discharged, the grown metal penetrates the separator so as to cause a minute short circuit between the anode and the cathode. In a battery in which the minute short circuit occurs, the voltage of the battery is lowered, and therefore the battery fails to pass shipment tests so as to lower the yield.

Therefore, Patent Citation 1 discloses a technology in which a Ni-plated steel sheet is formed into a case, and then the inner and outer surfaces of the can are coated with asphalt. In Patent Citation 1, the asphalt film suppresses the dissolution of Fe ions during aging and acts as an insulating film for the outer surface of the can. Patent Citation 2 discloses a technology in which a steel sheet is formed into a case, and then 1 µm to 10 µm-thick Ni is plated on the inner surface of the can, thereby suppressing micropores that are plating defects. In addition, Patent Citation 3 discloses a technology in which a compound composed of a metallic Ni and fluorine resin particles is plated on the surfaces of a steel sheet in order to suppress the dissolution of Fe ions when a battery is excessively discharged.

In addition, it is necessary to reduce contact resistance between a metal case and electrodes in order to improve the properties of a battery. Patent Citation 4 discloses a technology in which the surface of a steel sheet used as the inner surface of the anode can is subjected to a Ni-Co alloy plating and then forming so as to cause fine cracks in the plating, thereby increasing the contact area between the anode can and the anode. Patent Citation 5 discloses a Ni-plated steel sheet for the anode can of an alkaline manganese battery in which a Fe-Ni diffusion plated layer is formed on the surface of a steel sheet used as the inner surface of the anode can of an alkaline manganese battery, and the exposure ratio of Fe on the outermost surface of the Fe-Ni diffusion plated layer is 10% or higher. Patent Citation 6 discloses a battery can having a Ni-Fe alloy layer on the inner surface of the battery can and an oxide layer containing iron and having a thickness of 10 nm to 50 nm on the surface of the Ni-Fe alloy layer. As such, in Patent Citations 4 to 6, the adhesiveness between the surface layer of the plating of the battery can and the electrodes is improved so as to reduce internal resistance.

Furthermore, Patent Citations 7 to 10 disclose steel sheets having a Ni and Cu-based plating. In Patent Citation 7, in order to improve the adhesiveness of a plating to a plated steel sheet for the cathode plate of a button battery, both surfaces of the steel sheet are plated with different components (Ni or Cu) and then annealed so as to generate a diffusion layer at the interface between steel and plating. In Patent Citation 8, in order to improve the deep drawability of a Ni-plated steel sheet for primary batteries, the surface of the steel sheet used as the outer surface of a battery can is plated with Ni and then Cu, and is annealed so as to generate a diffusion layer on the plated steel sheet. In Patent Citation 9, in order to improve the corrosion resistance of a Cu-plated steel sheet for roofs and gutters, a thin Ni plating is formed between the steel sheet and the Cu plating, and is annealed so as to generate a diffusion layer on the plated steel sheet. In Patent Citation 10, in order to suppress the occurrence of iron rust on the surface of the cathode can of a lithium battery due to the reaction of a steel sheet with moisture in the atmosphere, a Cu-plated layer and a Ni-plated layer are formed on both surfaces of the steel sheet.

In addition, generally, in Ni decorative plating, Cu plating is performed on the surface of a material as a foundation for the Ni decorative plating. For example, Non-Patent Citation 1 suggests that, when a decorative plating requires not only an attractive appearance but also corrosion resistance, Cu plating is performed on the surface of a material as a foundation for Ni plating. In addition, Non-Patent Citation 2 suggests substitution of a part of a Ni plating with a Cu plating in order to reduce the amount of Ni used.

[Patent Citation 1] Japanese Unexamined Patent Application, First Publication No. 2007-66530
[Patent Citation 2] Japanese Unexamined Patent Application, First Publication No. 2007-87704
[Patent Citation 3] Japanese Unexamined Patent Application, First Publication No. 2002-231195
[Patent Citation 4] Japanese Unexamined Patent Application, First Publication No. H10-172521
[Patent Citation 5] Japanese Unexamined Patent Application, First Publication No. 2002-208382
[Patent Citation 6] Japanese Unexamined Patent Application, First Publication No. 2007-5092
[Patent Citation 7] Japanese Unexamined Patent Application, First Publication No. H4-52294
[Patent Citation 8] Japanese Unexamined Patent Application, First Publication No. H9-263994
[Patent Citation 9] Japanese Unexamined Patent Application, First Publication No. S57-108286
[Patent Citation 10] Japanese Unexamined Patent Application, First Publication No. H9-259844
[Patent Citation 11] Japanese Unexamined Patent Application, First Publication No. 2009-38036
[Patent Citation 12] Japanese Unexamined Patent Application, First Publication No. H5-106084
[Patent Citation 13] Japanese Unexamined Patent Application, First Publication No. H7-331458
[Patent Citation 14] Japanese Unexamined Patent Application, First Publication No. H3-249193
[Patent Citation 15] Japanese Unexamined Patent Application, First Publication No. 2005-232529
[Patent Citation 16] Japanese Unexamined Patent Application, First Publication No. 2008-31555
[Patent Citation 17] Japanese Unexamined Patent Application, First Publication No. H10-226873

[Non-Patent Citation 1] p 203, 3rd edition, Handbook of Plating Technologies, published by the Nikkan Kogyo Shimbun, Ltd. on October 30, 1977 [Non-Patent Citation 2] p 77, Practical Plating (I) for Engineers in Field, published by Maki Shoten on September 25, 1978
[Non-Patent Citation 3] p 177, "Practical Evaluation Technology of Lithium-Ion Battery, Capacitors," by Shizukuni Yada, Technical Information Institute Co., Ltd. (2006)

Regardless of application of a secondary battery (for example, a lithium ion battery), development of cathode active materials, anode active materials, electrolytes, and collectors is progressing in order to solve a plurality of problems with energy density, power density, cycle life, cost, safety, or the like at the same time. However, in the past, a material used as a metal case was selected based mainly on the properties in an unprocessed state, such as corrosion resistance, liquid sealing property, formability, or weldability, and costs. However, in the future, it will be necessary to promote development of a material for metal cases that improves the properties of a battery even when high deformation is performed, such as multi-stage forming. For example, there is demand for a material that can tolerate high deformation without damaging the properties of the material. Furthermore, for example, there is demand for a method that can manufacture a material having necessary properties without increasing the number of processes and costs.

The technologies in Patent Citations 1 to 3 have an effect of suppressing the dissolution of Fe ions during an aging process. However, in the technology of Patent Citation 1, the material cost of asphalt is high, and a dipping process of asphalt is added to the battery manufacturing process. In the technology of Patent Citation 2, since the thickness of a Ni plating is significantly increased from an original thickness of about 2 µm to a maximum thickness of 10 µm, the cost is markedly increased. In addition, even when the thickness of the plating is significantly increased, it is not guaranteed that the peeling of the plating from step portions can be prevented. In the technology of Patent Citation 3, since the conductivity of the plating is poor, it is necessary to weld a Ni lead plate on the bottom portion of a can before plating, attach a protective film so as to prevent the surface of the Ni lead plate from being plated with a plating, and then perform plating. Furthermore, Since it is necessary to detach the protective fiim, the number of processes increases.

In addition, in Patent Citations 4 to 6, the properties of a battery are improved by controlling the condition of the inner surface of a metal case. However, in order to reduce the contact resistance between the metal case and electrodes, cracks are formed in portions where the metal case and the electrodes come into contact with each other or Fe is exposed. Therefore, when the metal case of Patent Citations 4 to 6 is used in a lithium ion battery using an organic electrolyte, it is highly likely that the dissolution of Fe ions is accelerated in portions where the metal case and the electrodes come into contact with each other during an aging process. As such, the functions sought for the inner surface of a case are different in the present invention and Patent Citations 4 to 6.

In the technologies of Patent Citations 7 to 9, a thermal treatment is performed after Ni plating and Cu plating are performed on a steel sheet. However, the technologies of Patent Citations 7 to 9 have a different configuration of the plated layers from that of the present invention, in which the Ni plating forms a bottom layer. In addition, since the steel sheets of Patent Citations 7 to 9 are used for a primary battery or a construction material, such as a roof material, Patent Citations 7 to 9 do not deal with the degradation of corrosion resistance due to high deformation like multi-stage forming. Particularly, when the metal case of Patent Citations 7 to 9 is used in a secondary battery using an organic electrolyte, such as a lithium ion battery, it is highly likely that sufficient corrosion resistance cannot be obtained. In addition, in Patent Citation 10, a Cu-plated layer is formed on the surface of a steel sheet, and a Ni-plated layer is formed on the surface of the Cu-plated layer. The Cu-plated layer is used as a cushion material in order to prevent the occurrence of cracks in the Ni-plated layer during forming. However, since Patent Citation 10 does not deal with complicated or high deformation, the Ni-plated layer may be peeled from the Cu-plated layer or parts of the Ni plating may be fractured due to the difference in the physical properties between the Cu-plated layer and the Ni-plated layer. In addition, since a lithium battery using lithium or a lithium alloy for the cathode is used, it is not necessary to dope lithium in the cathode. Therefore, Patent Citation 10 does not deal with the dissolution of iron ions due to the peeling of the plating from the inner surface of the cathode can. Furthermore, in a lithium battery, since metallic lithium as well as metallic iron cause a minute short circuit, there is no need to deal with the dissolution of iron ions. As such, Patent Citation 10 does not deal with the strength of the plated layer and the corrosion resistance of the inner surface of the outer case during high deformation.

In the technologies of Non-Patent Citations 1 and 2, the plating is used as a decorative plating, and therefore postplating is performed on a metal product that has been processed in advance. Therefore, Non-Patent Citations 1 and 2 do not deal with the application as a metal case of a lithium ion battery. That is, Non-Patent Citations 1 and 2 do not deal with the degradation of corrosion resistance (the formation of portions where Fe ions dissolve) due to a strict multi-stage forming after plating. In addition, making the thickness of the plating extremely thin to suppress the degradation of corrosion resistance at a low cost is also not considered. Therefore, when the material of Non-Patent Citation 1 or 2 is used for a secondary battery using an organic electrolyte, such as a lithium ion battery, it is highly likely that sufficient corrosion resistance cannot be obtained.

That is, Patent Citations 1 to 10 and Non-Patent Citations 1 and 2 disclose no material for metal cases that can suppress the dissolution of Fe ions in the aging process of a lithium ion battery even when high deformation is performed. Furthermore, Patent Citations 1 to 10 and Non-Patent Citations 1 and 2 also do not deal with any method for improving the yield of batteries, reducing the costs for materials, and preventing changes in the manufacturing process of batteries.

### SUMMARY OF THE INVENTION

In order to solve the above problems, the inventors performed deformation processing, such as forming, scoring, or step-forming, using Ni-plated steel sheets, and then repeated investigations and thorough studies regarding the damage states of the Ni plating. As a result, the inventors found that, in the forming, protrusion portions of wrinkles caused by drawing were subjected to bending, bending back, or ironing such that the plating became thin, and Fe ions dissolved from the portion where the plating became thin. In addition, the inventors found that, in the scoring and the step-forming, the plating was peeled at the interface between the steel and the Fe-Ni diffusion layer. As a result of repeating further studies based on the above finding, the inventors found that, by forming a Cu plating which is excellent in terms of ductility, sliding properties, and adhesiveness as the bottom layer of a Ni plating which is excellent in terms of wear resistance, and alloying Cu and Ni, it is possible to suppress the exposure of Fe after strict forming and to suppress the dissolution of Fe ions. Furthermore, the inventors found that, by appropriately setting the thicknesses of the Cu plating and the Ni plating and the alloying conditions, and controlling the configuration and thichnesses of metal layers (single metal layers) and alloy layers, it is possible to suppress the exposure of Fe even when stricter forming is performed.

(1) The material for metal cases of secondary batteries using a non-aqueous electrolyte according to the present invention includes a steel sheet; and a plated layer that has a Ni layer, and a Cu-Ni layer, which is disposed between the Ni layer and the steel sheet and is in contact with the Ni layer, and is in contact with the steel sheet.
(2) The plated layer in the material for metal cases of secondary batteries using a non-aqueous electrolyte according to the above (1) may include areas containing 63 mass% or more of Cu.
(3) The plated layer in the material for metal cases of secondary batteries using a non-aqueous electrolyte according to the above (1) may include areas containing 80 mass% or more of Cu.
(4) The thickness of the areas in the plated layer in the material for metal cases of secondary batteries using a non-aqueous electrolyte according to the above (3) may be 0.25 µm to 4.0 µm.
(5) The plated layer in the material for metal cases of secondary batteries using a non-aqueous electrolyte according to the above (1) may include a Cu layer which is disposed between the steel sheet and the Cu-Ni layer and is in contact with the Cu-Ni layer.
(6) The plated layer in the material for metal cases of secondary batteries using a non-aqueous electrolyte according to the above (1) may include a Fe-Ni layer or a Fe-Cu-Ni layer which is disposed between the steel sheet and the Cu-Ni layer and is in contact with the steel sheet.
(7) The thickness of the Fe-Ni layer or the Fe-Cu-Ni layer in the material for metal cases of secondary batteries using a non-aqueous electrolyte according to the above (6) may be 0.2 µm to 1.0 µm.
(8) The plated layer in the material for metal cases of secondary batteries using a non-aqueous electrolyte according to the above (1) may include a Cr layer which is in contact with the Ni layer.
(9) The amount of the Cr layer in the material for metal cases of secondary batteries using a non-aqueous electrolyte according to the above (8) may be from 10 mg/m² to 3500 mg/m².
(10) The plated layer in the material for metal cases of secondary batteries using a non-aqueous electrolyte according to the above (1) may be in contact with both surfaces of the steel sheet.
(11) The thickness of the Cu-Ni layer in the material for metal cases of secondary batteries using a non-aqueous electrolyte according to the above (1) may be 0.35 µm to 3.0 µm.
(12) The thickness of the Ni layer in the material for metal cases of secondary batteries using a non-aqueous electrolyte according to the above (1) may be 0.20 µm to 4.0 µm.
(13) The metal case of secondary batteries using a non-aqueous electrolyte according to the present invention is manufactured using the material for metal cases according to the above (1).
(14) The secondary battery using a non-aqueous electrolyte according to the present invention includes the metal case according to the above (13), a cathode, an anode, a separator, and an electrolytic solution.
(15) The producing method of a material for metal cases of secondary batteries using a non-aqueous electrolyte according to the present invention includes (a) a copper plating process in which copper is plated on a steel sheet; (b) a nickel plating process in which nickel is plated after the copper plating process; and (c) a thermal treatment process in which heating is performed after the nickel plating process.
(16) The producing method of a material for metal cases of secondary batteries according to the above (15) may include (d) a strike plating process in which nickel or copper is plated on the steel sheet before the copper plating process.
(17) The producing method of a material for metal cases of secondary batteries according to the above (15) may include (e) a chromium plating process in which chromium is plated after the thermal treatment process.
(18) In the producing method of a material for metal cases of secondary batteries according to the above (17), the amount of chromium may be 10 mg/m² to 3500 mg/m² in the chromium plating process.
(19) In the producing method of a material for metal cases of secondary batteries according to the above (15), the heating temperature may be 400°C to 550°C, and the heating time may be 0.5 minute to 3 minutes in the thermal treatment process.
(20) In the producing method of a material for metal cases of secondary batteries according to the above (15), the heating temperature may be 550°C to 650°C, and the heating time may be 0.2 minute to 1 minute in the thermal treatment process.
(21) In the producing method of a material for metal cases of secondary batteries according to the above (15), a copper sulfate bath may be used in the copper plating process.

According to the present invention, the dissolution of Fe ions from a metal case during an aging process is suppressed in a secondary battery using a non-aqueous electrolyte, such as a lithium ion battery. As a result, the voltage drop of the battery due to the precipitation of Fe on the surface of the cathode during charging and discharging is avoided, and the yield of the battery is improved. In addition, it is possible to provide a secondary battery with stable quality at a low cost without altering the manufacturing process of the battery.

In addition, for example, by forming a Cr layer on the outermost surface layer of a material for metal cases, the exposure of Fe during forming can be further suppressed, and the inner surface of the case is passivated in a non-aqueous electrolytic solution. As a result, it is possible to use the material even when the metal case is insulated from electrodes, and to provide a material for cases which is low-priced and excellent in terms of productivity for use of large-scale batteries for electromotive automobiles, such as electric automobiles. In addition, even when a secondary battery comes to have a higher voltage and a higher capacity so as to reach the potential of the case in which Ni is dissolved, a Ni plating does not dissolve. Therefore, it is possible to provide secondary batteries with a stable quality at a low cost for application in both electromotive automobiles and home electrical appliances.

### BRIEF DESCRIPTION OF THE DRAWINGS

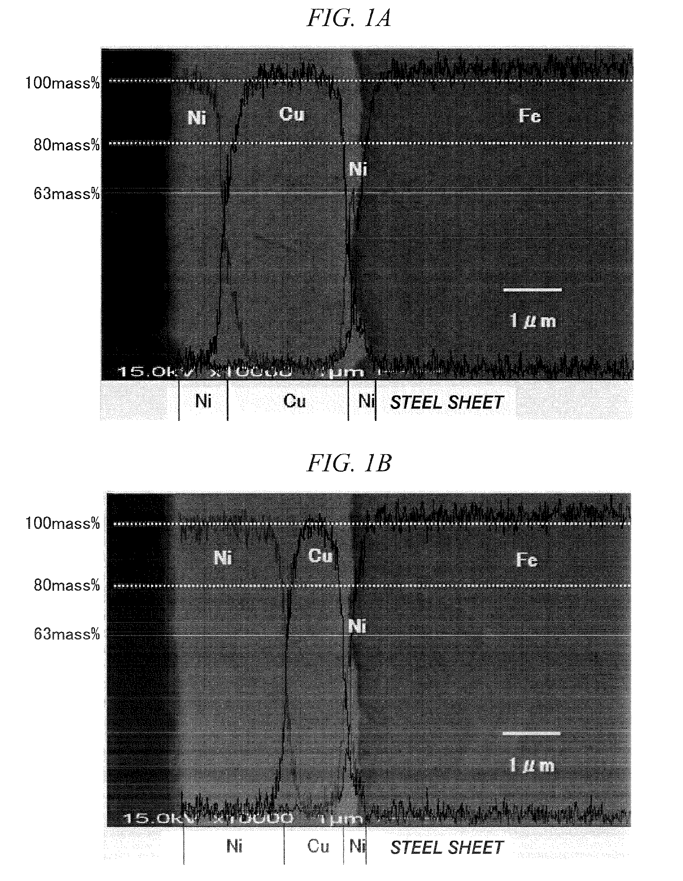

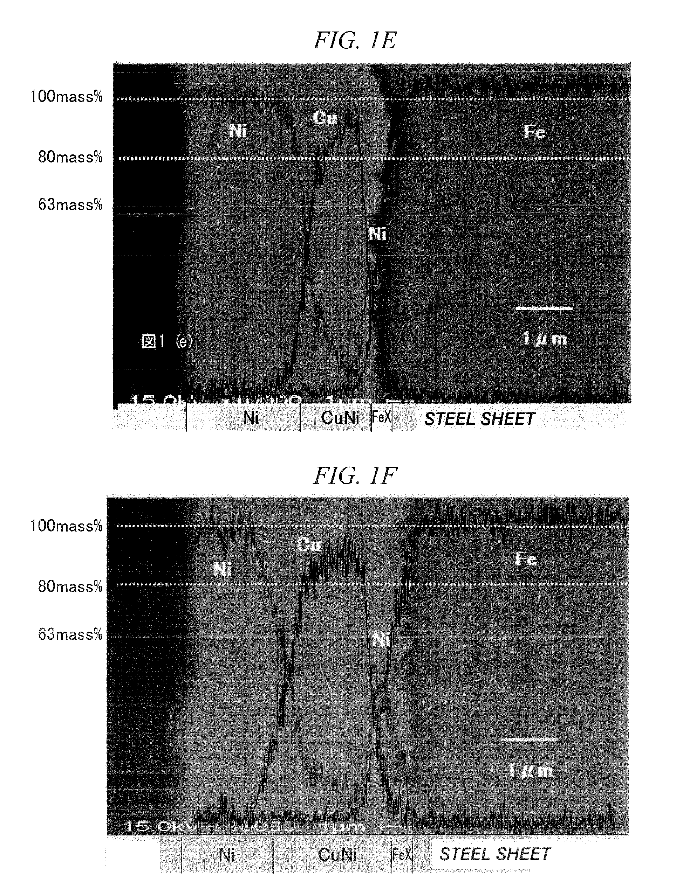

FIG. 1A shows a SEM image and the results of EDX line analysis of the cross section of a material for metal cases of a comparative example on which no thermal treatment has been performed.
FIG. 1B shows a SEM image and the results of EDX line analysis of the cross section of a material for metal cases of a comparative example on which no thermal treatment has been performed.

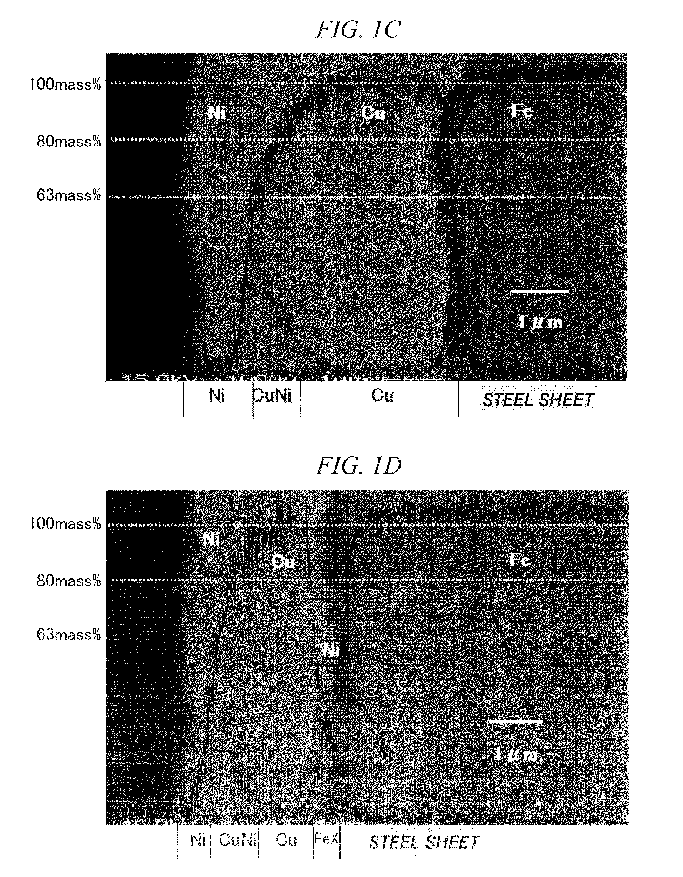

FIG. 1C shows a SEM image and the results of EDX line analysis of the cross section of a material for metal cases of an example of an embodiment of the present invention.
FIG 1D shows a SEM image and the results of EDX line analysis of the cross section of a material for metal cases of an example of an embodiment of the present invention.
FIG. 1E shows a SEM image and the results of EDX line analysis of the cross section of a material for metal cases of an example of an embodiment of the present invention.
FIG. IF shows a SEM image and the results of EDX line analysis of the cross section of a material for metal cases of an example of an embodiment of the present invention.

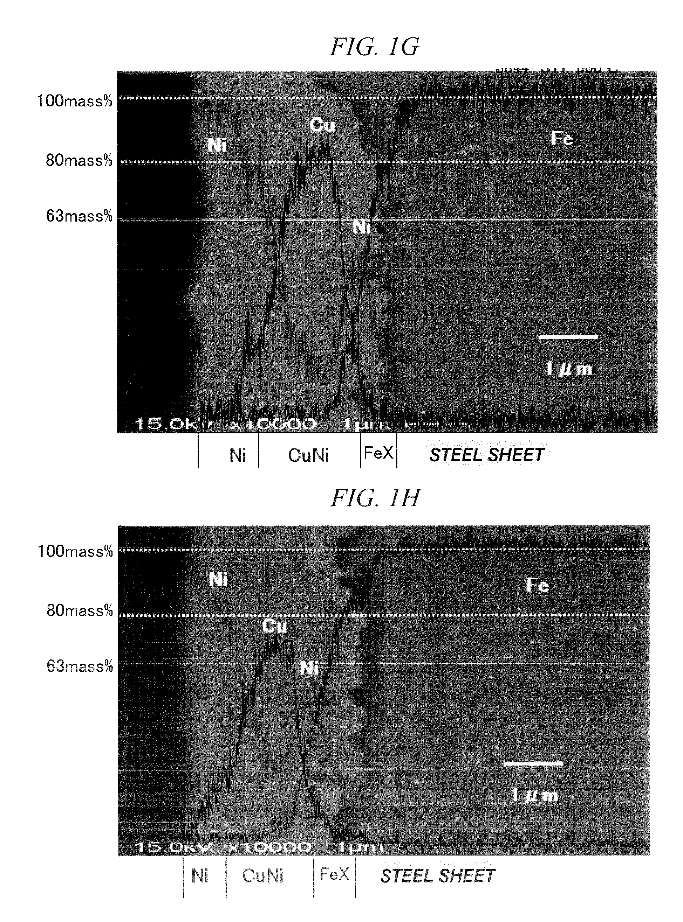

FIG 1G shows a SEM image and the results of EDX line analysis of the cross section of a material for metal cases of an example of an embodiment of the present invention.
FIG. 1H shows a SEM image and the results of EDX line analysis of the cross section of a material for metal cases of an example of an embodiment of the present invention.
FIG. 1 I shows a SEM image and the results of EDX line analysis of the cross section of a material for metal cases of a comparative example including no Ni layer.
FIG. 1 J shows a SEM image and the results of EDX line analysis of the cross section of a material for metal cases of a comparative example including no Ni layer.
FIG. 2A shows a schematic diagram of the elemental distribution in the cross section of a material for metal cases which is a modified example of the embodiment of the present invention.
FIG. 2B shows a schematic diagram of the elemental distribution in the cross section of a materials for metal cases which is a modified example of the embodiment of the present invention.
FIG. 3 is a vertical cross-sectional view of a die for a drawing process.
FIG. 4A is a view showing the configuration of platings in a material for metal cases which is an example of the embodiment of the present invention.
FIG. 4B is a view showing the configuration of platings in a material for metal cases which is an example of the embodiment of the present invention.
FIG. 4C is a view showing the configuration of platings in a material for metal cases which is an example of the embodiment of the present invention.
FIG. 4D is a view showing the configuration of platings in a material for metal cases which is an example of the embodiment of the present invention.
FIG. 5A is a view showing the configuration of platings in a material for metal cases which is a modified example of the embodiment of the present invention.
FIG. 5B is a view showing the configuration of platings in a material for metal cases which is a modified example of the embodiment of the present invention.
FIG. 5C is a view showing the configuration of platings in a material for metal cases which is a modified example of the embodiment of the present invention.
FIG. 5D is a view showing the configuration of platings in a material for metal cases which is a modified example of the embodiment of the present invention.

### DETAILED DESCRIPTION OF THE INVENTION

Hereinafter, the configuration of a secondary battery using a non-aqueous electrolyte to which the material for metal cases and the metal case according to the present invention are applied will be described. Meanwhile, in the present specification and the drawings, components having substantially the same function and configuration will be given the same reference symbol, thereby avoiding redundant descriptions. A secondary battery using a non-aqueous electrolyte to which the present invention can be applied is, for example, a lithium ion battery. The secondary battery using a non-aqueous electrolyte includes an electrode group, a non-aqueous electrolyte, and a metal case. In addition, the electrode group is composed of an anode, a cathode, and a separator present between the anode and the cathode. For example, in the case of a lithium ion battery, the anode is an aluminum (Al) foil plated with an anode active material which can charge and discharge lithium. In addition, for example, the cathode is a copper (Cu) foil plated with a cathode active material which can charge and discharge lithium. Furthermore, for example, in a lithium ion battery, the non-aqueous electrolyte contains lithium salt added as a solute and is stored in the separator. Additionally, the electrode group is wound or laminated so that the anode and the cathode are separated by the separator, and is connected to a current collector. The metal case houses the electrode group. The metal case may have a shape, such as a cylindrical shape, a rectangular shape, a rectangular shape with the corners removed (an ellipsoidal shape or a track shape like a running track), a coin shape, a button shape, or a sheet shape. In the present invention, it is possible to suppress the dissolution of Fe ions from the metal case during an aging process even in a case in which the material has a large area (shape) that is liable to be damaged when the material is formed into a can.

The anode active material of the secondary battery using a non-aqueous electrolyte in the present invention is not particularly limited. As the anode active material, a layered compound, such as anhydrous cobaltate (LiCoO₂) or lithium nickelate (LiNiO₂), a spinel compound, such as lithium manganate(LiMn₂O₄), and an olivine compound, such as lithium iron phosphate (LiFePO₄), may be used. In addition, as the anode active material, a compound in which a part of metal elements constituting one of the above compounds is substituted with other transition metal elements or a compound obtained by adding typical metal elements to one of the above compounds may be used. For example, in the case of a lithium ion battery, as an example of the above compounds, LiNiO₂, LiNi_{0.8}Co_{0.2}O₂, LiMn_{0.5}Ni_{0.5}O₂, LiNiCoAlO₂, and compounds having different quantitative ratios from the these compounds can be used.

The cathode active material of the secondary battery using a non-aqueous electrolyte in the present invention is also not particularly limited. In the case of a lithium ion battery, a preferable cathode active material is a carbon-based material in which lithium ions reversibly intercalate and disintercalate in accordance with charging and discharging. For example, as the carbon-based material, an amorphous material, such as non-graphitizable carbon or graphitizable carbon, and a crystalline carbon material, such as graphite, can be used. In addition, the above carbon-based materials may be modified using tin oxide, silicon oxide, phosphorus, boron, fluorine, or the like. In addition, by electrochemically reducing the above carbon-based material in advance, lithium ions may be intercalated into a carbon-based material.

In the secondary battery using a non-aqueous electrolyte according to the present invention, as the solvent of the non-aqueous solvent-based electrolyte (non-aqueous electrolyte), for example, cyclic carbonates, such as ethylene carbonate, propylene carbonate, butylene carbonates, or vinylene carbonate, or chain carbonates, such as dimethyl carbonate, methyl ethyl carbonate, or diethyl carbonate, can be used. Particularly, it is preferable to use a mixture of a cyclic carbonate and a chain carbonate.

As the solute of the non-aqueous electrolyte in the present invention, in the case of a lithium ion battery, a lithium salt, such as LiPF₆, LiBF₄, or LiClO₄, can be preferably used. In addition, the above lithium salt may be mixed. That is, in the secondary battery using a non-aqueous electrolyte of the present invention, there is no limitation on the configuration of the anode active material, the cathode active material, and the non-aqueous electrolyte as long as metal ions can move in the electrolyte and electric charges can be transferred from and to both electrodes.

In the secondary battery using a non-aqueous electrolyte in the present invention, as the separator, for example, a film, such as a woven fabric, a non-woven fabric, and a synthetic resin microporous membrane, can be used. Particularly, a polyethylene or polypropylene microporous membrane is preferable.

In the secondary battery using a non-aqueous electrolyte in the present invention, a metal case having excellent safety is used as the outer case of the battery. A laminate-type outer case is advantageous since the case can easily house the electrode group. However, the laminate-type outer case has a low strength, and therefore it is necessary to constitute an assembled battery and then cover the periphery of the outer case with metal. In addition, in comparison to a metal case, a resin case can be freely formed and has a light weight. However, the cost, safety, and cooling efficiency of a resin case are poor in comparison to a metal case.

In order to simplify the configuration of the assembled battery, the metal case of the present invention may be connected to the cathode. When the metal case is connected to the cathode, only an anode terminal needs to be added as a terminal. However, when the metal case is insulated from electrodes, it is necessary to add an anode terminal and a cathode terminal as terminals. Additionally, since single batteries need to be connected in series, the volume of the assembled battery becomes large. In addition, when larger attention needs to be paid to the costs and safety required for the insulation of the outer case like a large-scale battery, the metal case may be insulated from electrodes.

In the present invention, as a material (metal) for the outer case, a steel sheet including Ni and a Cu-Ni alloy (solid solution) plated on at least one surface is used. As the steel sheet, a stainless steel sheet can be used. However, it is preferable to use a steel sheet other than a stainless steel sheet as a material for the outer case from the viewpoint of cost and workability. That is, since Fe is inexpensive, a steel sheet containing Fe as the main chemical component is excellent in terms of cost performance in comparison to a metal material such as aluminum. The steel sheet is plated with a small amount of Ni in order to secure the corrosion resistance in an organic solvent. In the material for outer cases of the present invention, the dissolution of Fe ions due to damage in the Ni plating is suppressed when the material is formed into an outer case. Particularly, a material for metal cases according to a modified example of the embodiment of the present invention as described below has further improved corrosion resistance.

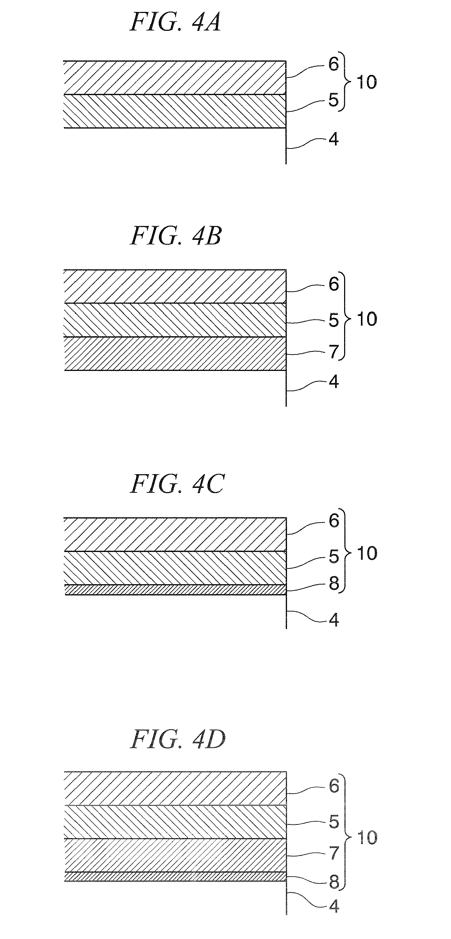

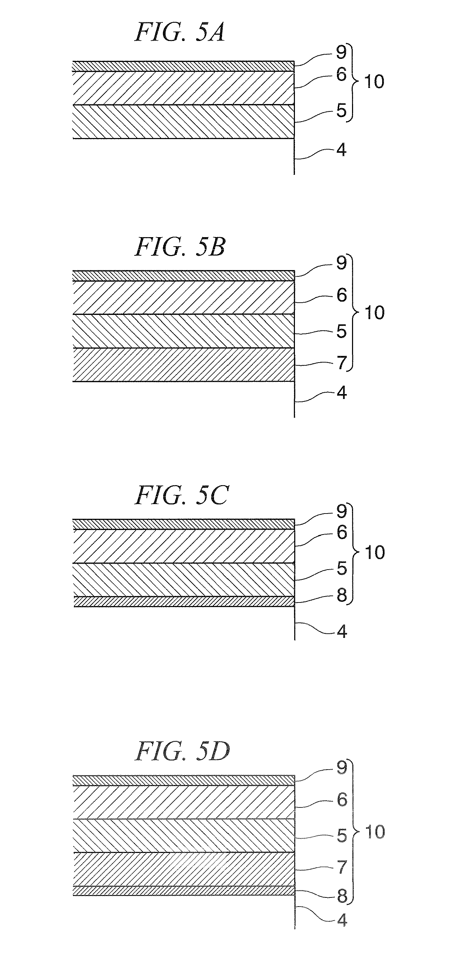

Next, the configuration of the material (a plated steel sheet) for metal cases of the present invention will be described. The material for metal cases of the present invention includes a steel sheet and a plated layer that is in contact with at least one surface of the steel sheet. In addition, the metal case of the present invention is formed so that the plated layer forms the inner surface of the case. The material for metal cases according to the embodiment of the present invention is manufactured by, for example, forming a Cu plating that is excellent in terms of ductility, sliding properties, and adhesiveness on a steel sheet or a pre-plated steel sheet, forming a Ni plating that is excellent in terms of wear resistance on the Cu plating, and then heating the steel sheet in order to form a Cu-Ni layer (a Cu-Ni diffusion layer, a layer of Cu-Ni solid solution). A material for metal cases according to a modified example of the embodiment of the present invention is manufactured by further forming a Cr plating on the Ni plating. The configuration of single metal layers and an alloy layer can be controlled by appropriately controlling the thicknesses of the Cu plating and the Ni plating and the heating conditions for alloying. Therefore, as shown in FIG. 4A, a plated layer 10 in the material for metal cases according to the embodiment of the present invention includes at least a Ni layer 6 and a Cu-Ni layer 5 (the bottom layer of the Ni layer) that is disposed between the Ni layer 6 and a steel sheet 4 and is in contact with the Ni layer 6. Similarly, as shown in FIG. 5A, in a modified example of the embodiment of the present invention as described below, the plated layer 10 in the material for metal cases includes at least the Ni layer 6, the Cu-Ni layer 5 (the bottom layer of the Ni layer) that is disposed between the Ni layer 6 and a steel sheet 4 and is in contact with the Ni layer 6, and a Cr layer 9 that is in contact with the Ni layer 6. Here, since the Ni layer 6 has high wear resistance, damage on the surface of the plated layer are suppressed during processing. The Cu-Ni layer 5 excellent in terms of ductility coats the surface of the steel sheet 4 along the steel sheet 4 during processing. Therefore, even when the Ni layer 6 is damaged by forming, the surface of the steel sheer 4 is not exposed, and the dissolution of Fe ions is suppressed by the Cu-Ni layer 5 during aging. Furthermore, since the Cu-Ni layer 5 has excellent adhesiveness to the Ni layer 6 and the steel sheet 4, the peeling of the plating (for example, the detachment between the Cu-Ni layer 5 and the Ni layer 6) during processing is prevented. (Additionally, due to the excellent adhesiveness to the Ni layer 6, the Cu-Ni layer 5 suppresses damage in layers on or above the Cu-Ni layer 5 (for example, the Ni layer 6).) That is, when the Ni layer 6 or the Cu-Ni layer 5 is not present in the plated layer 10, the plated layer 10 is significantly damaged during processing.

In addition, as shown in FIG 4B and FIG. 5B, the plated layer 10 may include a Cu layer 7 (the bottom layer of the Cu-Ni layer 5) that is disposed between the steel sheet 4 and the Cu-Ni layer 5 and is in contact with the Cu-Ni layer 5. In this case, since the ductility of the Cu layer 7 is higher than the ductility of the Cu-Ni layer 5, the plated layer 10 moves on with the steel sheet 4 even during stricter processing.

It is preferable that the plated layer 10 include areas containing 63 mass% or more of Cu. The ductility of the areas containing 63 mass% or more of Cu is higher than the ductility of areas containing less than 63 mass% of Cu. Therefore, the plated layer 10 moves on with the steel sheet 4 even during stricter processing, and high corrosion resistance can be maintained.

In addition, it is more preferable that the plated layer 10 include areas containing 80 mass% or more of Cu. The ductility of the areas containing 80 mass% or more of Cu is higher than the ductility of areas containing less than 80 mass% of Cu. Therefore, the plated layer 10 moves on with the steel sheet 4 even during further stricter processing, and high corrosion resistance can be maintained.

Furthermore, as shown in FIGS. 4C, 4D, 5C, and 5D, the plated layer 10 may include a Fe-Ni layer or a Fe-Cu-Ni layer 8 that is disposed between the steel sheet 4 and the Cu-Ni layer 5 and is in contact with the steel sheet 4. In this case, since the adhesiveness between the steel sheet 4 (base steel sheet) and the plated layer 10 becomes high, the plated layer 10 moves on with the steel sheet 4 even during further stricter processing. The thickness of the Fe-Ni layer or the Fe-Cu-Ni layer 8 is not particularly limited. However, the diffusion depth of Ni in the steel sheet 4 (the thickness of the Fe-Ni layer or the Fe-Cu-Ni layer 8) is preferably 0.2 µm to 1 µm. When the diffusion depth is less than 0.2 µm, the adhesiveness between the steel sheet 4 (base steel sheet) and the plated layer 10 is not sufficient. When the diffusion depth exceeds 1 µm, the adhesiveness between the steel sheet 4 (base steel sheet) and the plated layer 10 is saturated.

The thickness of the Cu-Ni layer 5 (the layer of Cu-Ni solid solution) is preferably 0.35 µm to 3.0 µm. When the thickness of the Cu-Ni layer 5 is less than 0.35 µm, the plated layer 10 does not sufficiently deform depending on processing. When the thickness of the Cu-Ni layer 5 exceeds 3.0 µm, the effect of the plated layer 10 deforming depending on processing is saturated.

The thickness of the Ni layer 6 is preferably 0.20 µm to 4.0 µm. When the thickness of the Ni layer 6 is less than 0.20 µm, the surface of the plated layer 10 is liable to be damaged by processing. When the thickness of the Ni layer 6 exceeds 4.0 µm, the effect of wear resistance is saturated.

The total thickness of the areas containing 80 mass% or more of Cu in the plated layer 10 is preferably 0.25 µm to 4.0 µm. When the plated layer 10 does not include the Cu layer 7, the total thickness of the areas containing 80 mass% or more of Cu in the plated layer 10 is the thickness of the areas containing 80 mass% or more of Cu in the Cu-Ni layer 5. In addition, when the plated layer 10 includes the Cu layer 7, the total thickness of the areas containing 80 mass% or more of Cu in the plated layer 10 is the sum of the thickness of the Cu layer 7 and the thickness of the areas containing 80 mass% or more of Cu in the Cu-Ni layer 5. When the total thickness is less than 0.25 µm, the plated layer 10 does not sufficiently deform depending on processing. When the total thickness exceeds 4.0 µm, the effect of the plated layer 10 deforming depending on processing is saturated.

Additionally, when higher corrosion resistance is required, as shown in FIGS. 5A to 5D, the plated layer 10 preferably includes the Cr layer 9 that is in contact with the Ni layer 6. That is, in a modified example of the embodiment of the present invention, the plated layer in the material for metal cases includes at least the Ni layer 6, the Cu-Ni layer 5 (the bottom layer of the Ni layer 6) that is disposed between the Ni layer 6 and the steel sheet 4 and that is in contact with the Ni layer 6, and the Cr layer 9 (the top layer of the Ni layer 6) that is in contact with the Ni layer 6.

Particularly, a secondary battery for electric automobiles, such as a lithium ion battery, has a large scale and high capacity. Therefore, when a metal case is connected to the cathode, there may be a risk of electric shock, and therefore a metal case is often insulated from electrodes. In this case, corrosion resistance for the long-term use of the secondary battery, particularly corrosion resistance with respect to hydrogen fluoride generated in an electrolytic solution in a small amount is required. Therefore, in the current situation, stainless steel is used for a metal case insulated from electrodes. However, the cost is high, the productivity in forming is low, and there is a possibility that secondary working embrittlement occurs.

Similarly, even in the use of home electrical appliances in which a metal case is connected to the cathode, a secondary battery, such as a lithium ion battery, needs to have higher energy density (high voltage and high capacity). Therefore, the potential of the metal case becomes high, and there is a possibility that Ni plating will dissolve. For example, Patent Citation 11 discloses a technology in which, in order to make a high capacity for the cathode and a long service life of a battery, preliminary charging is performed with the cut-off potential set to 4.6 V, and then charging is performed with the cut-off potential set to 4.2 V. In this case, even a Ni plating may dissolve. Therefore, even when the potential of the inner surface of a metal case becomes high, it is necessary that metal ions do not dissolve. Furthermore, it is required to suppress damage in a plating and the exposure of the surface of the steel sheet caused by forming and welding.

When a secondary battery is configured using a material for metal cases including a Cr layer, the Cr layer increases the potential at the inner surface of the metal case in an electrolytic solution and thus provides a high corrosion resistance to the inner surface of the metal case. However, when the plated layer does not include a Cu-Ni layer, it is likely that the Ni layer is damaged during forming such that the surface of the steel sheet is exposed, and therefore Fe and Cr are present in the inner surface of the case. Since Fe and Cr have significantly different potential, Fe ions are easily dissolved through exposed portions on the surface of the steel sheet. Therefore, the modified example of the embodiment of the present invention in which the plated layer includes the Cr layer and the Cu-Ni layer can be used even in a secondary battery having high energy density in which Ni may dissolve.

As technologies to improve corrosion resistance by Cr plating, Patent Citations 12 to 14 disclose steel sheets having a Ni and Cr-based plating. Patent Citation 12 suggests a technology in which, in order to provide a glossy appearance and corrosion resistance, after Ni is plated on a low carbon steel sheet, partial diffusion annealing is performed, and then glossy Ni plating and Cr plating are performed sequentially. Patent Citation 13 suggests a technology in which, in order to provide a glossy plated steel sheet for use in which no additional plating is performed, glossy Ni plating is performed on the surface of a steel sheet with defined roughness, glossy Cr plating is performed, and then the surface of the plating is coated with a transparent resin. Patent Citation 14 discloses a technology in which, in order to provide a weld can excellent in terms of pitting corrosion resistance and corrosion resistance after plating, Cr plating and Ni plating are performed sequentially on a steel sheet so that the amount of plating becomes 0.2 g/m² or less, a thermal treatment is performed, and then an amount of 1 g/m² or less of Ni is plated and a chromate treatment are performed.

Patent Citations 15 to 17 disclose products having Ni, Cu, and Cr-based platings. Patent Citation 15 suggests a technology in which, in order to improve the corrosion resistance of a product so as to maintain the attractive appearance for a long term, Cu plating, pure Ni plating, glossy Ni plating, and Cr plating are performed sequentially on plastic or metal, and then the surface of the Cr plating is passivated by anodic oxidation or a chemical treatment. Patent Citation 16 suggests a sequential lamination technology in which, in order to provide roughness and conductivity to the plastic surfaces of automobile parts or the like, a metallic thin film of a Ni-Cr alloy or Cr which secures adhesiveness with a resin that has been subjected to an activation treatment and a conductive thin film of Cu or Ni are provided, and then finish plating, such as a Cu plating, a Ni plating, and a Cr plating, are performed. Patent Citation 17 suggests a technology in which, in order to provide a steel sheet which has a low price and high corrosion resistance and is used as a building exterior material in shore regions, a Fe-Cr-Ni alloy layer is generated on a Cu plating of a steel. For this, a series of Cu plating, Fe plating, Cr plating, and Ni plating or a series of Cu plating, Cr plating, Fe plating, and Ni plating is performed on the surface of an ordinary steel, and then a thermal treatment is performed.

However, when the plated steel sheet of Patent Citations 12 and 13 is used as a material of a product which will undergo strict processes, such as a battery can, the hard Ni plating is lost by the processes, and thus the steel sheet is exposed to an electrolytic solution such that Fe dissolves. In the case of the plated steel sheet for weld cans of Patent Citation 14, since the plated layer is thin, the plated layer cannot tolerate forming of a battery can.

In Patent Citations 15 and 16, since plating is performed after forming, the reduction of corrosion resistance when forming is performed through strict forming and the reduction of the thickness of the plating which is required for the cost reduction are not dealt with. In addition, the plated steel sheet for building exterior materials in Patent Citation 17 does not consider the reduction of corrosion resistance when forming is performed through strict forming.

Since the material for metal cases according to the modified example of the embodiment of the present invention is formed through strict forming, even when the material is used as an outer case of a secondary battery, the dissolution of Fe ions is suppressed during an aging process, and the corrosion resistance in a secondary battery having high energy density is improved.

In addition, when the plated layer in the material for metal cases according to the modified example of the embodiment of the present invention includes the above Cu layer (the bottom layer of the Cu-Ni layer), it is possible to maintain high corrosion resistance by the metallic Cr even when a far stricter forming is performed.

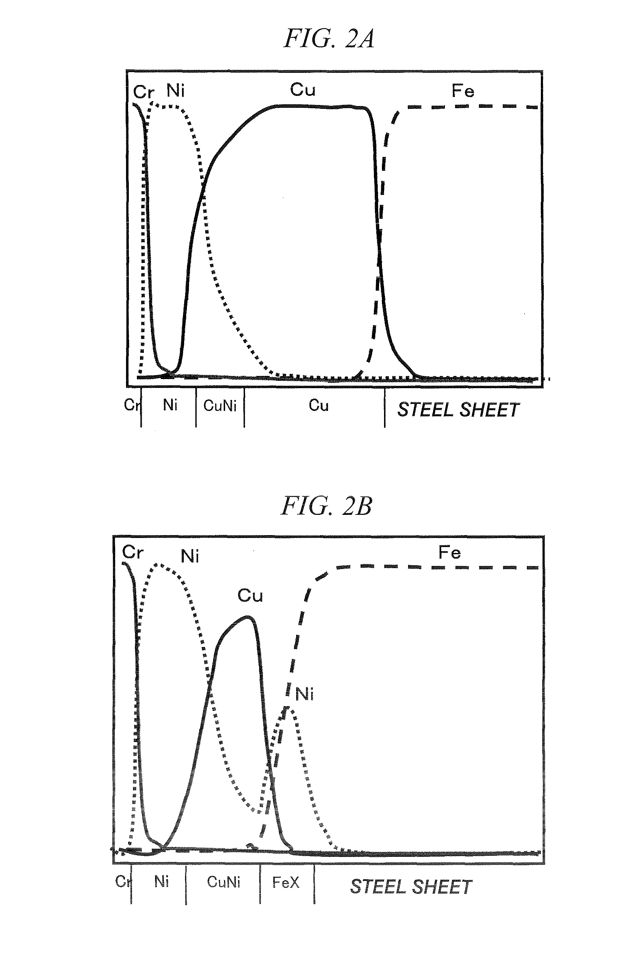

The amount of the Cr layer (the plating amount of metallic Cr) is preferably 10 mg/m² to 3500 mg/m². When the amount of the Cr layer is less than 10 mg/m², the corrosion resistance is not sufficiently improved. In addition, when the amount of the Cr layer exceeds 3500 mg/m², the effect of improving the corrosion resistance is saturated due to the occurrence of cracks. When the plating amount of Cr is small, it is difficult to measure the concentration of Cr with EDX line analysis. Therefore, the plating amount of the metallic Cr is preferably measured by inductively coupled plasma (ICP) spectroscopy after the plated layer is dissolved in an acid. In addition, when the plating amount of the metallic Cr is extremely small, it is possible to confirm the presence of the metallic Cr by performing a surface analysis through X-ray photoelectron spectroscopy (XPS). Therefore, the material for metal cases according to the modified example of the embodiment of the present invention has the elemental distribution shown in, for example, FIGS. 2A and 2B. That is, the material has a configuration in which a Cr layer is present on the surface of the metal case of the embodiment of the present invention.

Furthermore, the outer case of a secondary battery also needs to have corrosion resistance in the outer surface of the case which is exposed to the atmosphere. Therefore, even in the outer surface of the case, it is necessary to reduce the exposure of the surface of the steel sheet after processing. Therefore, it is preferable to form the above plated layer in a manner in which the plated layer is in contact with both surfaces of the steel sheet. However, the plated layer (a second plated layer) corresponding to the outer surface of the outer case may have a different configuration from the plated layer (a first plated layer) corresponding to the inner surface of the outer case. In addition, the plated layer corresponding to the outer surface of the outer case may have the same configuration as the plated layer corresponding to the inner surface of the outer case in order to simplify the plating process.

Next, how to identify and measure the thicknesses of the Cu-Ni layer, the Ni layer, the Cu layer, the areas containing 63 mass% or more of Cu, the areas containing 80 mass% or more of Cu, and the Fe-Ni layer or the Fe-Cu-Ni layer will be described.

Measurement samples are prepared by vertically polishing the material for outer cases. The polished surfaces of the samples are observed using an SEM, and, through EDX line analysis, Cu, Ni, and Fe are identified, and the amounts thereof are measured. As the positions of EDX line analysis, a portion that corresponds to the average thickness of the plated layer in a SEM image (photograph) is selected. Meanwhile, the average thickness of the plated layer is obtained in advance through chemical analysis or the like. In addition, it is preferable to perform EDX line analysis using three or more different samples. Furthermore, it is preferable to perform EDX line analysis in at least 3 lines in a sample. For EDX spectroscopy with SEM, for example, JSM-7000F, which is a field emission scanning electron microscope (FE-SEM) manufactured by JEOL Ltd., and GENESIS 4000, which is an energy dispersive X-ray (EDX) analyzer manufactured by EDAX, can be used. In addition, as the conditions for electron beams, for example, the acceleration voltage is set to 15 KV, and the beam diameter is set to 10 nm.

Hereinafter, in addition to the measurement method, the embodiment and comparative examples of the present invention will be described using FIGS. 1A to 1J. All of FIGS. 1A to 1J show the SEM images and the results of EDX line analysis of the cross sections of the samples. The mass% of each of the elements is expressed in the vertical axis, and the background of each data item is calibrated so that the mass% of Fe in the steel sheets becomes 100 mass%. In addition, the boundaries of each layer are expressed below the horizontal axis. Meanwhile, in FIGS. 1A to 1J, the Ni layer, the Cu layer, the Cu-Ni layer, and the Fe-Ni layer or the Fe-Cu-Ni layer are expressed as Ni, Cu, CuNi, and FeX respectively. Firstly, the comparative example including no Cu-Ni layer of FIGS. 1A and 1B will be described. The results of EDX line analysis of the comparative examples include areas where 100 mass% of Cu is detected, areas where 100 mass% of Ni is detected, and areas (boundary areas) where the mass% of Cu and Ni abruptly vary between the above two areas, in the plated layer. The thicknesses of the boundary areas (the length in the horizontal axis direction) are about 1 µm in all of the comparative examples. The diameter of an area in which the sample generates X-rays when electron beams are irradiated to the sample is about 1 µm, and the X-rays from the area are detected by EDX line analysis. That is, when EDX line analysis is performed on an area including the boundary between the Cu layer and the Ni layer, about 1 µm of a boundary area where the mass% of Cu and Ni abruptly varies is detected. Therefore, the boundary between the Cu layer and the Ni layer is determined at the middle point of the boundary area, that is, a position 0.5 µm leftward away from the left end of the area where 100 mass% of Cu is detected. Similarly, with regard to other alloy systems, the boundaries between the respective layers (for example, the boundary between the Cu layer and the steel sheet) are determined in the same manner. It is possible to obtain the thicknesses of the respective layers from the determined boundaries of the respective layers. Meanwhile, even when the measurement apparatuses are different, it is merely necessary to amend the widths of the above boundaries in accordance with the resolution of the measurement apparatus (for example, an SEM/EDX apparatus). In the comparative examples of FIGS. 1A and 1B, since the plated layer does not include the Cu-Ni layer, there is a possibility that the plated layer may be separated between the Cu layer and the Ni layer during forming.

Next, an example of the embodiment of the present invention will be shown in FIGS. 1C to 1H. Meanwhile, the degree of the thermal treatment decreases in the order of FIGS. 1C and 1D, FIGS. 1E and IF, FIG. 1G, and FIG. 1H.

FIG. 1C shows an example of the embodiment of the present invention including a Cu layer, a Cu-Ni layer, and a Ni layer in this order from the steel sheet (from the bottom layer). Since an area where 100 mass% of Cu is detected and an area here 100 mass% of Ni is detected are present, the Cu layer and the Ni layer are present in the plated layer. On the other hand, unlike FIGS. 1A and 1B, since the thickness of the boundary area is 1 µm or more, it is possible to confirm the presence of the Cu-Ni layer in the plated layer. The boundary between the Cu layer and the Cu-Ni layer is determined at a position 0.5 µm (half of 1 µm) leftward away from the left end of the area where 100 mass% of Cu is detected. In addition, the boundary between the Ni layer and the Cu-Ni diffusion layer is, similarly, determined at a position 0.5 µm (half of 1 µm) rightward away from the right end of the area where 100 mass% of Ni is detected. Therefore, the thickness of the Cu-Ni layer is the length of the distance between the left end of the area where 100 mass% of Cu is detected and the right end of the area where 100 mass% of Ni is detected from which 1.0 µm is subtracted.

FIG. 1D shows an example of the embodiment of the present invention including a Fe-Ni layer or a Fe-Cu-Ni layer (FeX), a Cu layer, a Cu-Ni layer, and a Ni layer in this order from the steel sheet (from the bottom layer). Since the distance (the length in the horizontal axis direction) from the left end of the area where 100 mass% of Fe is detected to the right end of the area where no Fe is detected is longer than 1 µm, it is possible to confirm the presence of an alloy layer containing Fe. In addition, the thickness of the Fe-Ni layer or the Fe-Cu-Ni layer is substantially the same as the thickness of the protrusion and recess portions in the boundary between the steel sheet (base steel sheet) and the plated layer in the SEM image. Therefore, it is possible to confirm the presence of an alloy layer containing Fe from the protrusions and recesses in the boundary between the steel sheet (base steel sheet) and the plated layer in the Seem image.

Next, FIGS. 1E to 1H all show an example of the embodiment of the present invention including a Fe-Ni layer or a Fe-Cu-Ni layer (FeX), a Cu-Ni layer, and a Ni layer in this order from the Steel sheet (from the bottom layer). Since an area where 100 mass% of Ni is detected is present, the plated layer includes the Ni layer. However, since there is no area where 100 mass% of Cu is detected, the plated layer does not include a Cu layer. Therefore, areas where Cu is detected are the Cu-Ni layer. The thicknesses of areas containing 80 mass% or more of Cu in the Cu-Ni layer are determined by measuring the horizontal direction length (L₈₀) of areas where 80 mass% or more of Cu is detected by EDX spectroscopy. In FIG. 1H, there is no area containing 80 mass% or more of Cu in the Cu-Ni diffusion layer. However, there are areas containing 63 mass% or more of Cu in the Cu-Ni diffusion layer. The thicknesses of the areas containing 63 mass% or more of Cu in the Cu-Ni diffusion layer are determined by measuring the horizontal direction length (L₆₃) of the areas where 63 mass% or more of Cu is detected by EDX spectroscopy. Meanwhile, the thickness of areas containing from 63 mass% to less than 80 mass% of Cu is calculated by L₆₃ - L₈₀.

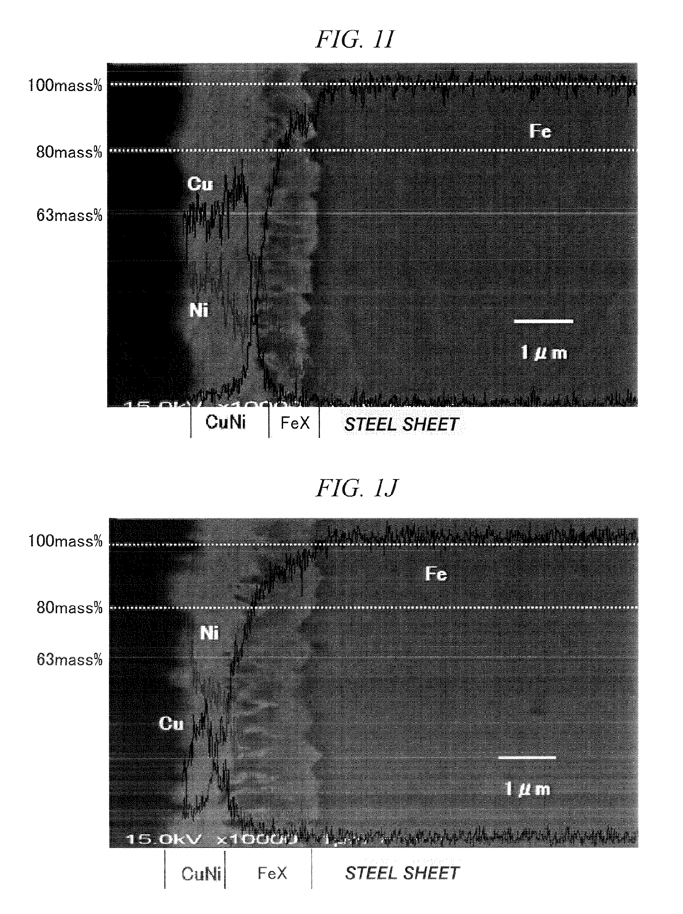

Finally, the comparative examples of FIGS. 1I and 1J will be described. In the comparative examples, the plated layers include a Fe-Ni layer or a Fe-Cu-Ni layer (FeX) and a Cu-Ni layer in this order from the steel sheet (the bottom layer), but do not include a Ni layer. In addition, since the plated layers are obtained by excessive heating after plating, the Fe alloy layers (FeX) become thick. Since the comparative examples of FIGS. 1I and 1J lack both ductility and wear resistance of the plated layer, it is difficult to use the materials of comparative examples as a material for outer cases of secondary batteries manufactured by forming.

Furthermore, the producing method of the material for outer cases of the present invention will be described. The producing method of the material for outer cases of the present invention includes at least a copper plating process in which copper is plated on a steel sheet; a nickel plating process in which nickel is plated after the copper plating process; and a thermal treatment process in which heating is performed after the nickel plating process. Here, as a material for the steel sheet, for example, it is possible to use such types of steel as low-carbon aluminum killed steel, ultralow-carbon steel (sulc), or the like. The thickness of the steel sheet is generally 0.1 mm to 1 mm. The steel sheet is annealed in advance before plating. In addition, before plating is performed on the steel sheet, the surface of the steel sheet on which plating is to be performed is cleaned by a cleaning method, such as degreasing or pickling.

In the copper plating process, electroplating is performed using a well-known alkaline bath, such as a copper cyanide bath or a pyrophosphate copper bath, or an acidic bath, such as a copper sulfate bath. In addition, a well-known gloss additive may be added to the copper plating bath. The thickness of a copper plating is determined in consideration of the thicknesses of the Cu-Ni layer and the Cu layer which are required for the material for outer cases of the present invention. Particularly, when a thick Cu layer is formed, it is preferable to use an acidic bath, such as a copper sulfate bath. The acidic bath is preferably a copper sulfate bath. Since the current density in the electroplating using the copper sulfate bath is higher than the current density in the electroplating using an alkaline bath, it is possible to shorten the time to complete the copper plating and to easily perform the waste liquid treatment or bath maintenance.

Particularly, when an acidic bath, such as a copper sulfate bath, is used in the copper plating process, a strike plating process in which nickel or copper is plated on a steel sheet may be performed before the copper plating process in order to improve the electrodeposition properties of the surface of a steel sheet. A strike plating (plating due to strike plating) is formed as thin as possible. However, the strike plating needs to have a thickness that can suppress immersion deposition in the copper plating process. Therefore, specifically, the thickness of the strike plating is preferably about 0.2 µm. Meanwhile, when copper is plated in the strike plating process, electroplating is performed using a well-known alkaline bath, such as a copper cyanide bath or a pyrophosphate copper bath, or an acidic bath, such as a copper sulfate bath. In addition, when nickel is plated in the strike plating process, electroplating is performed using a well-known bath, such as a Watts bath or a chloride bath. A clean steel sheet may be immersed in an aqueous solution of boron acid before performing nickel strike plating in order to suppress the thickness of the Fe-Ni layer or the Fe-Cu-Ni layer which is generated in the thermal treatment process. For example, using an aqueous solution of boric acid having a concentration of 10 g/l to 100 g/l at a temperature of 30°C to 60°C, a steel sheet is immersed in the aqueous solution for from 1 second to 10 seconds.

In the nickel plating process, electroplating is performed using a well-known bath, such as a Watts bath, a fluoroborate bath, or a sulfamate bath. The thickness of a nickel plating is determined in consideration of the thicknesses of the Cu-Ni diffusion layer and the Ni layer which are required for the material for outer cases of the present invention. In addition, a gloss additive, such as a grain refiner (a first gloss agent) or a leveling agent (a leveler, a second gloss agent), may be added to the nickel plating bath. For example, in order to form a glossy Ni plating, both a grain refiner and a leveling agent may be added to the nickel plating bath. In order to form a semi-glossy Ni plating, only one of a grain refiner and a leveling agent may be added to the nickel plating bath. Furthermore, alloy elements, such as P, B, Cr, Co, and Mo, may be added to the nickel plating bath. In this case, it is preferable to limit the amount of the alloy elements to 10 mass% or less in order to obtain the effect of adding the alloy elements while the excellent wear resistance and uniform coatability of the nickel plating are maintained.

In order to obtain the configuration of the metal layers (single metal layers) and the alloy layer (the configuration of the plated layer) and the preferable thicknesses of the respective layers of the present invention, the nickel plating process preferably includes a boric acid immersion treatment in which a Cu-plated steel sheet is immersed in an aqueous solution of boric acid before nickel is plated. For example, using an aqueous solution of boric acid having a concentration of 10 g/l to 100g/l at a temperature of 30°C to 60°C, a steel sheet is immersed in the aqueous solution for from 1 second to 10 seconds. Since the boric acid immersion treatment makes it possible to set a wide range of heating conditions under which the plated metal is diffused when the thermal treatment process is performed, it is possible to easily obtain the preferable thickness of the alloy layer.

In the thermal treatment process, the plated metals are diffused (mutual diffusion) by heating. Under a gentle heating condition, since the amount of the plated metals diffused is small, the Cu-Ni layer is not generated. Under a strict heating condition, since the amount of the plated metals diffused is large, there is no area containing a large amount of Cu in the plated layer left. Therefore, when areas containing at least 63 mass% or more of Cu are obtained, it is possible to perform heating at a temperature of 550°C to 650°C for from 0.2 minute to 1 minute. In addition, when areas containing at least 80 mass% or more of Cu are obtained, it is preferable to perform heating at a temperature of 400°C to 550°C for 0.5 minute to 3 minutes. The above heating conditions are far gentler than the heating conditions in Patent Citations 7 to 9. For example, Patent Citation 7 describes the gentlest heating condition in which heating is performed at a temperature of 600°C for 3 minutes. In addition, Patent Citation 8 suggests box annealing at a temperature of 500°C to 800°C for 5 hours to 8 hours or continuous annealing at a temperature of 700°C to 900°C for 30 seconds to 2 minutes. In addition, in Patent Citation 9, heating is performed, for example, at a temperature of 700°C for 8 hours. In Patent Citations 7 to 9, the steel is annealed after plating so that a Fe-Ni layer is generated at the boundary between the steel and the plating. That is, since the platings are alloyed by mutual diffusion, and, at the same time, the steel sheet is annealed, a high heating temperature is required. In the present invention, plating is performed on a steel (a steel sheet) which has been annealed in advance, and therefore there is no need to perform a thermal treatment in consideration of annealing. Therefore, it is possible to determine the heating condition only in consideration of the diffusion of Cu and Ni. In addition, in the present invention, there is no need to generate a Fe-Ni layer on the surface of the steel sheet (base steel sheet). Meanwhile, when strike plating of nickel is performed, the nickel diffuses in the steel sheet (base steel sheet) or the copper plating due to heating. Therefore, a Fe-Ni layer or a Fe-Cu-Ni layer is generated in the vicinity of the boundary between the steel sheet (base steel sheet) and the plating. As a result, the adhesiveness between the plated layer and the steel sheet is improved.

After the thermal treatment process, a chromium plating process in which chrome is plated may be performed. In the chromium plating process, firstly, pickling is performed through electrolysis or immersion in order to remove oxidized layers generated on the surface layer of the plating due to the thermal treatment. The condition of the pickling is not limited as long as the pickling does not damage the platings. After the pickling, chromium plating is performed on the surface of the nickel layer (the plated layer). The conditions of the chromium plating are generally the same as the conditions of decorative chromium plating. That is, electroplating is performed using a well-known chromium plating bath, such as a Sargent bath, a fluoride-containing bath, a micro crack bath, a micro porous bath, a tetrachromate bath, or a trivalent chromium bath. For example, industrially, it is preferable to use a Sargent bath or a sodium silicofluoride-added bath. In this case, the concentration, current density, temperature of the bath, and the thickness of the plating are selected so that the steel sheet is uniformly plated without causing a number of cracks in the plating. Particularly, when large attention is paid to corrosion resistance, it is possible to use a micro crack bath or a micro porous bath.

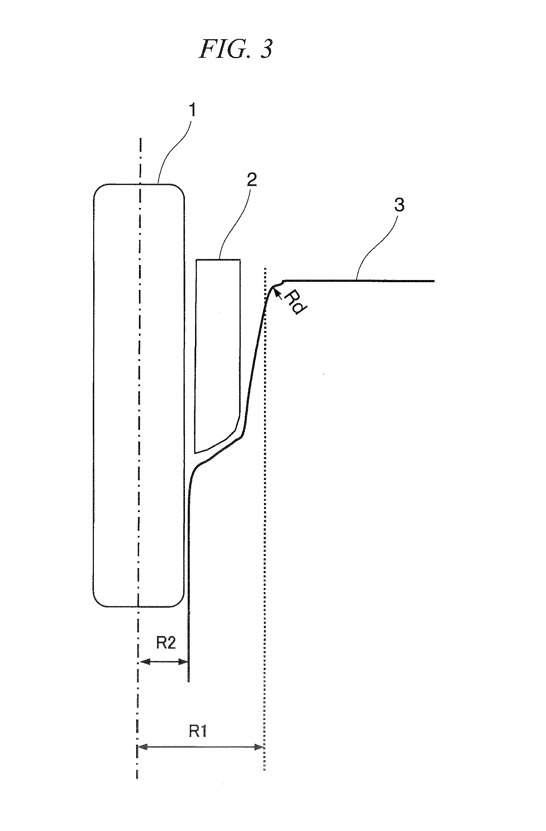

When a metal case (for example, a lithium ion battery can) is manufactured using the material for metal cases (a plated steel sheet) of the present invention, it is preferable to perform ordinary multi-stage forming. The material for metal cases of the present invention is more resistant to damage in the plating than an ordinary Ni-plated steel sheet regardless of forming conditions. However, in order to reliably prevent damage in the plating, it is preferable to optimize the forming conditions. A method for reducing damage in the plating in the multi-stage forming will be specifically described using FIG. 3. FIG. 3 shows a punch 1, a die 3, and a blank holder 2 which constitute a drawing die. The causes for the occurrence of damage in the plating in the process are the friction between wrinkles generated in the plated steel sheet during drawing and the shoulder of the die 3, and a decrease in the thickness of the plating due to the drawing. Damage to the plating caused by performing drawing in a state in which wrinkles are present in the plated steel sheet can be reduced by increasing the blank holding pressure of the blank holder 2. Damage in the plating caused by the friction with the shoulder of the die 3 can be reduced by increasing the radius Rd of the die shoulder or decreasing the blank holding pressure of the blank holder 2. Damage in the plating caused by the decrease in the thickness of the plating due to the drawing can be reduced by decreasing the drawing ratio R1/R2. Meanwhile, since the material for metal cases of the present invention includes a plated layer that is excellent in terms of sliding property and durability, as a forming method other than multi-stage forming, for example, it is possible to reduce the amount of a lubricant or a coolant used when a DI process is performed. Therefore, the material for metal cases of the present invention is superior from the viewpoint of the improvement in the productivity of forming and the cost reduction. As a result, the material for metal cases of the present invention can be used as a material for a secondary battery using a non-aqueous electrolyte in an arbitrary configuration (for example, a lithium battery, a lithium ion battery, a lithium air battery, or the like). Particularly, the material for metal cases of the present invention is preferably used as a material for lithium ion batteries.

The secondary battery using a non-aqueous electrolyte according to the present invention (for example, a lithium ion battery) includes at least the metal case of the present invention, a cathode, an anode, a separator, and an electrolytic solution. The secondary battery may be manufactured by an ordinary manufacturing method using the metal case of the present invention. In order to diffuse the electrolytic solution into the anode, the cathode, and the separator so as to stabilize the charging and discharging properties in the initial stage, it is preferable to perform the aging process for several days. At this time, in order to diffuse the electrolytic solution the electrolytic solution may be heated to about 40°C. In the secondary battery using a non-aqueous electrolyte of the present invention, since an extremely small number of Fe ions is dissolved during the aging process, a minute short circuit that reduces the voltage of the battery does not occur even when the battery is charged and discharged after the aging process. As a result, it is possible to manufacture secondary batteries with a high yield.

Next, examples of the present invention will be described in an unlimited manner. Materials for outer cases were manufactured in the following manner.

### (A) Steel sheet samples

Annealed and cold-rolled sheets of low-carbon aluminum killed steel or Nb-Ti-sulc steel having the chemical elements shown in Table 1 (steel sheet) were used. The thicknesses of the steel sheets were all 0.3 mm. In a 2% H₂-N₂ atmosphere, the steel sheets were annealed in a manner in which the steel sheets were held in a furnace for 80 seconds. The highest temperature of the sheet of low-carbon aluminum killed steel during the annealing was 740°C. In addition, the highest temperature of the sheet of Nb-Ti-sulc steel during the annealing was 780°C. Meanwhile, among Examples and Comparative Examples in Tables 3 to 6 that will be described below, Materials Nos. 1 to 19 and Materials Nos. 39 to 57 were low-carbon aluminum killed steel, and Materials Nos. 20 to 38 and Materials Nos. 58 to 76 were Nb-Ti-sulc steel.

**[Table 1]**

| Type of Steel | Amounts of chemical elements mass%) | | | | | |
|---|---|---|---|---|---|---|
| | C | si | Mn | P | Ti | Nb |
| Low-carbon aluminum killed steel | | 0.055 0.009 | 0.29 | 0.014 | - | - |
| Nb-Ti-sulc steel | 0.0014 | 0.009 | 0.11 | 0.005 | 0.017 | 0.014 |

### (B) Plating conditions and heating conditions (manufacture of for metal cases)

Table 2 shows the compositions of a variety of plating baths and the conditions of electroplating. Using the conditions of electroplating, plating shown in Tables 3 to 6 was performed on both surfaces of the steel sheets. Meanwhile, the letters in the column of the plating condition in Tables 3 to 6 correspond to the letters (a) to (g) indicating the types of electroplating in Table 2. In addition, Tables 3 to 6 show the highest temperatures of the steel sheets and the times during which the steel sheets were held in the furnace (heating times) as the heating conditions of the thermal treatment process. Thermal treatments were performed under the conditions so as to produce materials for metal cases (case materials). Tables 3 to 6 show the configurations of the plated layers and the thicknesses of each layer in the produced case materials. The thicknesses of each layer are the average of values obtained by EDX line analysis of a total of 9 lines in accordance with the above method. Meanwhile, Tables 5 and 6 show the plating amount of Cr layer per unit area.

The symbols used for the configurations of the plated layers in Table 3 show the following layers or areas.
FeNi or FeCuNi indicates the Fe-Ni layer or the Fe-Cu-Ni layer (FeX in FIGS. 1D to 1J and FIG. 2B). Cu, CuNi, and Ni respectively indicate the Cu layer, the Cu-Ni layer, and the Ni layer. Cu₈₀Ni₂₀ to Cu₁₀₀ indicate areas containing 80 mass% or more of Cu which were included in the Cu layer and the Cu-Ni layer. Cu₂₀Ni₈₀ to Ni₁₀₀ indicate areas complaining 80 mass% or more of Ni which were included in the Ni layer and the Cu-Ni layer. Cu₆₃Ni₃₇ to Cu₈₀Ni₂₀ indicate areas containing 63 mass% to less than 80 mass% of Cu.

**[Table 2]**

| (a) Copper cyanide plating | | | |
|---|---|---|---|
| Cuprous cyanide | 70g/l | Bath temperature | 50°C |
| Sodium cyanide | 80g/l | Current density | 5A/dm² |
| Na₂CO₃ | 12g/l | Anode | Electrolytic copper |
| Rochelle salt | 45g/l | | |

| (b) Copper sulfate plating | | | |
|---|---|---|---|
| Copper sulfate | 200g/l | Bath temperature | 50°C |
| Sulfuric acid | 50g/l | Current density | 10A/dm² |
| Gloss agent | 2g/l | Anode | High phosphorous copper |

| (c) Cu strike plating | | | |
|---|---|---|---|
| Cuprous cyanide | 30g/l | Bath temperature | 50°C |
| Sodium cyanide | 40g/l | Current density | 2A/dm² |
| Na₂CO₃ | 30g/l | Anode | Electrolytic copper |
| Rochelle salt | 60g/l | | |

| (d) Semi-gloss Ni plating | | | |
|---|---|---|---|
| Nickel sulfate | 240g/l | Bath temperature | 50°C |
| Nickel chloride | 45g/l | Current density | 10A/dm² |
| Boric acid | 35g/l | Anode | Ni particles |
| Grain refiner | 2g/l | | (Ti basket) |

| (e) Gloss Ni plating | | | |
|---|---|---|---|
| Nickel sulfate | 240g/l | Bath temperature | 50°C |
| Nickel chloride | 45g/l | Current density | 10A/dm² |
| Boric acid | 35g/l | Anode | Ni particles |
| Grain refiner | 2g/l | | (Ti basket) |
| Leveler | 2g/l | | |

| (f) Mat Ni plating | | | |
|---|---|---|---|
| Nickel sulfate | 240g/l | Bath temperature | 50°C |
| Nickel chloride | 45g/l | Current density | 10A/dm² |
| Boric acid | 35g/l | Anode | Ni particles (Ti basket) |

| (g) Ni strike plating | | | |
|---|---|---|---|
| Nickel sulfate | 150g/l | Bath temperature | Ambient temperature |
| Nickel chloride | 15g/l | Current density | 0.5A/dm² |
| Ammonium chloride | 15g/l | Anode | Ni particles (Ti basket) |

| (h) Cr plating | | | |
|---|---|---|---|
| Chromic acid anhydride | 350g/l | Bath temperature | 50°C |
| Sulfuric acid | 3.5g/l | Current density | 30A/dm² |
| | | Anode | lead alloy |

### (C) Manufacture of battery cans

The above case materials were formed into cylindrical cans for 18650 battery (metal cases) through multi-stage forming. The case materials using the low-carbon aluminum killed steel as the steel sheet (base steel sheet) were formed through a total of 7 processes. In addition, the case materials using the Nb-Ti-sulc steel as the steel sheet (base steel sheet) were formed through a total of 5 processes. The total drawing ratio through the total process was set to 4.56 in the case of the low-carbon aluminum killed steel and to 4.24 in the case of the Nb-Ti-sulc steel. Regardless of the drawing ratio at which the case materials were formed, the drawing process included a process in which the plating became thin due to subsequent bending or bending back, or ironing in the protrusion portions of wrinkles generated by the drawing.

### (D) Manufacture of batteries

Using the above battery cans as outer cases, 18650 lithium ion batteries (secondary batteries) were produced in the following manner.

### (D-a) Anode plates

Lithium cobaltate was used as the anode active material. Acetylene black and polyvinylidene fluoride (PVDF) were added to the anode active material and then mixed. The mixing ratio of the mixture was 10:10: 1 of lithium cobaltate: acetylene black: polyvinylidene fluoride. After that, the mixture was plated on aluminum (Al) at an aqueous dispersion, and the A1 foils were dried. The A1 foils were rolled so as to have a predetermined thickness, and were cut into a predetermined size, thereby manufacturing anode plates (anodes).

### (D-b) Cathode plates

Amorphous carbon was used as the cathode active material. The cathode active material was dry-mixed with acetylene black which is a conductive material. Furthermore, a paste was manufactured by uniformly dispersing N-methyl-2-pyrrolidone (NMP), in which polyvinylidene fluoride was dissolved, in the mixture. The mixing ratio of each substance in the paste was 88:5:8 of amorphous carbon: acetylene black: PVDF. The paste was coated on copper (Cu) foils, and the Cu foils were dried. After that, the Cu foils were rolled so as to have a predetermined thickness, and were cut into a predetermined size, thereby manufacturing cathode plates (cathodes).

### (D-c) Separator and electrolyte

A polyethylene microporous membrane was used as the separator. As the electrolyte, a solution (electrolytic solution) of a mixed liquid having a volume ratio of ethylene carbonate: dimethyl carbonate: ethyl methyl carbonate = 25:35:40, to which 1 mol/l of LiPF₆ was added, was used.

### (D-d) Cylindrical batteries (cathode connection)

The anode plate and the cathode plate were wound in a manner in which the separator separated the anode plate and the cathode plate, thereby manufacturing an electrode group. Furthermore, the electrode group, a non-aqueous electrolyte, and a current collector connected to the electrode group were housed in the above battery can. After that, the battery can was connected to the cathode through a cathode lead plate, and a battery cap was mounted, thereby manufacturing a 18650 cylindrical battery. In order to appropriately evaluate the cylindrical batteries, 15 pieces of each of the case materials shown in Tables 3 to 6 were prepared.

### (D-e) Rectangular batteries (insulation from electrodes)

In addition, using the case materials for which chromium plating was performed, rectangular batteries insulated from electrodes were manufactured in the following manner.
Firstly, using a 0.7 mm-thick steel sheet (base steel sheet), the case materials shown in Tables 5 and 6 were manufactured. The case material was formed into a rectangular battery can with a height of 113 mm, a width of 44 mm, and a length of 171 mm through multi-stage forming. A lithium ion battery using the rectangular battery can as the outer case was manufactured using the anode plate, the cathode plate, the separator, and the electrolytic solution. However, the battery can was insulated from electrodes, and an anode terminal and a cathode terminal were separately provided. In order to appropriately evaluate the rectangular batteries, 10 pieces of each of the case materials shown in Tables 5 and 6 were prepared.

**[Table 3]**

| Material No. | Plating condition | | | | | | | | Heating treatment | | Configuration of plating layer and thickness of each layer (µm) | | | | | | | |
|---|---|---|---|---|---|---|---|---|---|---|---|---|---|---|---|---|---|---|
| | Treatment to base steel sheet | Base plating | | Cu plating | | Intermediate treatment | Ni plating | | Temperature (°C) | Time (min) | FeNi FeCuNi | Cu | CuNi i | Ni | Cu₈₀Ni₂₀ to Cu₁₀₀ t | Cu₂₀Ni₈₀ to Ni₁₀₀ | Cu₆₃Ni₁₇ to Cu₈₀Ni₂₀ | |
| | | Type | Thickness (µm) | Type | Thickness (µm) | | Type | Thickness (µm) | | | | | | | | | | |
| 1 | None | None | - | (a) | 1.0 | Boric acid | (d) | 1.0 | 400 | 2 | None | 0.7 | 0.4 | 0.9 | 0.78 | 0.98 | 0.1 | Example |
| 2 | None | None | - | (a) | 1.0 | Boric acid | (d) | 1.0 | 450 | 2 | None | 0.4 | 0.9 | 0.7 | 0.58 | 0.88 | 0.2 | Example |
| 3 | None | None | - | (a) | 2.0 | Boric acid | (d) | 2.0 | 400 | 2 | None | 1.7 | 0.4 | 1.9 | 1.78 | 1.98 | 0.1 | Example |
| 4 | None | None | - | (a) | 2.0 | Boric acid | (d) | 2.0 | 450 | 2 | None | 1.4 | 0.9 | 1.7 | 1.58 | 1.88 | 0.1 | Example |
| 5 | None | None | - | (a) | 3.0 | Boric acid | (d) | 3.0 | 500 | 2 | None | 2.2 | 1.2 | 2.6 | 2.44 | 2.84 | 0.3 | Example |
| 6 | None | None | - | (a) | 0.5 | Boric acid | (d) | 1.5 | 400 | 2 | None | 0.2 | 0.4 | 1.4 | 0.28 | 1.48 | 0.2 | Example |
| 7 | None | None | - | (a) | 1.5 | Boric acid | (d) | 1.5 | 500 | 2 | None | 0.0 | 1.9 | 1.1 | 0.38 | 1.48 | 0.7 | Example |
| 8 | None | None | - | (a) | 1.0 | None | (d) | 2.0 | 530 | 1.7 | None | 0.0 | 1.9 | 1.1 | 0.0 | 1.5 | 1.0 | Example |
| 9 | None | None | - | (a) | 1.5 | Boric acid | (d) | 0.5 | 500 | 1 | None | 1.1 | 0.6 | 0.3 | 1.22 | 0.42 | 0.1 | Example |
| 10 | None | None | - | (a) | 1.5 | Boric acid | (d) | 1.8 | 500 | 2 | None | 0.0 | 1.9 | 1.4 | 0.38 | 1.78 | 0.6 | Example |
| 11 | Boric acid | (g) | 0.4 | (b) | 1.0 | Boric acid | (d) | 0.7 | 650 | 0.4 | 0.4 | 0.0 | 1.2 | 0.3 | 0.0 | 0.40 | 0.7 | Example |
| 12 | Boric acid | (g) | 0.4 | (b) | 1.5 | Boric acid | (d) | 0.7 | 650 | 0.4 | 0.3 | 0.0 | 1.7 | 0.4 | 0.66 | 0.50 | 0.5 | Example |
| 13 | Boric acid | (g) | 0.4 | (b) | 2.0 | Boric acid | (d) | 0.7 | 650 | 0.4 | 0.2 | 0.0 | 2.1 | 0.5 | 0.95 | 0.65 | 0.4 | Example |
| 14 | Boric acid | (g) | 0.2 | (b) | 1.0 | Boric acid | (d) | 1.0 | 500 | 2 | 0.2 | 0.2 | 1.2 | 0.6 | 0.44 | 0.84 | 0.3 | Example |
| 15 | Boric acid | (g) | 0.2 | (b) | 1.0 | Boric acid | (d) | 1.5 | 500 | 2.5 | 0.2 | 0.1 | 1.4 | 1.1 | 0.37 | 1.32 | 0.6 | Example |
| 16 | Boric acid | (g) | 0.2 | (b) | 1.0 | Boric acid | (d) | 2.0 | 500 | 2 | 0.2 | 0.2 | 1.2 | 1.6 | 0.44 | 1.84 | 0.3 | Example |
| 17 | None | (g) | 0.2 | (b) | 1.5 | Boric acid | (d) | 1.0 | 500 | 2 | 0.15 | 0.5 | 1.2 | 0.6 | 0.74 | 0.84 | 0.2 | Example |
| 18 | None | (g) | 0.2 | (b) | 2.0 | Boric acid | (d) | 1.0 | 500 | 2 | 0.15 | 1.0 | 1.2 | 0.6 | 1.24 | 0.84 | 0.2 | Example |
| 19 | None | (g) | 0.3 | (b) | 0.7 | None | (e) | 0.7 | 600 | 0.7 | 0.4 | 0.0 | 1.1 | 0.1 | 0.2 | 0.14 | 0.7 | Example |

**[Table 4]**

| Material No. | Plating condition | | | | | | | | Heating treatment | | Configuration of plating layer and thickness of each layer (µm) | | | | | | | |
|---|---|---|---|---|---|---|---|---|---|---|---|---|---|---|---|---|---|---|
| | Treatment to base steel sheet | Base plating | | Cu plating | | Intermediate treatment | Ni plating | | Temperature (°C) | Time (min) | FeNi FeCuNi | Cu | CuNi | Ni | Cu₈₀Ni₂₀ to Cu₁₀₀ | Cu₂₀Ni₈₀ to Ni₁₀₀ | Cu₆₃Ni₃₇ to Cu₈₀Ni₂₀ | |
| | | Type | Thickness (µm) | Type | Thickness (µm) | | Type | Thickness (µm) | | | | | | | | | | |
| 20 | None | (c) | 0.2 | (b) | 1.0 | Boric acid | (d) | 0,5 | 400 | 2 | None | 0.7 | 0.4 | 0.4 | 0.78 | 0.48 | 0.1 | Example |
| 21 | None | (c) | 0.2 | (b) | 0.5 | Boric acid | (d) | 1.0 | 400 | 2 | None | 0.2 | 0.4 | 0.9 | 0.28 | 0.98 | 0.1 | Example |
| 22 | None | (c) | 0.2 | (b) | 2.0 | Boric acid | (d) | 1.0 | 500 | 2 | None | 1.2 | 1.2 | 0.6 | 1.44 | 0.84 | 0.3 | Example |
| 23 | None | (c) | 0.2 | (b) | 2.0 | Boric acid | (d) | 2.0 | 500 | 3 | None | 1.0 | 1.5 | 1.5 | 1.3 | 1.8 | 0.6 | Example |
| 24 | None | (c) | 0.2 | (b) | 3.0 | Boric acid | (d) | 4.0 | 500 | 2 | None | 2.2 | 1.2 | 3.6 | 2.44 | 3.84 | 0.4 | Example |
| 25 | None | (c) | 0.2 | (b) | 4.0 | Boric acid | (d) | 3.0 | 500 | 2 | None | 3.2 | 1.2 | 2.6 | 3.44 | 2.84 | 0.4 | Example |
| 26 | Boric acid | (g) | 0.3 | (b) | 1.0 | Boric acid | (e) | 2.0 | 600 | 0.5 | 0.2 | 0.0 | 0.9 | 2.0 | 0.36 | 2.18 | 0.2 | Example |
| 27 | Boric acid | (g) | 0.3 | (b) | 1.5 | Boric acid | (e) | 2.0 | 600 | 0.5 | 0.3 | 0.0 | 1.6 | 1.7 | 0.65 | 2.05 | 0.5 | Example |
| 28 | None | (g) | 0.3 | (b) | 2.0 | Boric acid | (e) | 2.0 | 650 | 0.4 | 0.3 | 0.0 | 2.6 | 1.3 | 1.02 | 1.81 | 0.7 | Example |
| 29 | None | None | - | (a) | 1.0 | Boric acid | (e) | 4.0 | 520 | 2 | None | 0.0 | 1.3 | 2.7 | 0.0 | 3.22 | 0.0 | Example |
| 30 | None | (g) | 0.4 | (b) | 0.7 | None | (d) | 2.0 | 650 | 0.4 | 0.4 | 0.0 | 2.1 | 0.4 | 0.0 | 0.82 | 1.3 | Example |
| 31 | None | None | - | (a) | 1.5 | Boric acid | (d) | 0.5 | No heating | | None | 1.5 | 0.0 | 0.5 | 1.5 | 0.5 | 0.0 | Comparative Example |
| 32 | Boric acid | (g) | 0.2 | (b) | 1.0 | Boric acid | (d) | 1.0 | No heating | | None | 1.0 | 0.0 | 1.0 | 1.0 | 1.0 | 0.0 | Comparative Example |
| 33 | None | None | - | (a) | 1.0 | Boric acid | (d) | 1.0 | 300 | 2 | None | 0.9 | 0.0 | 1.0 | 0.9 | 1.0 | 0.0 | Comparative Example |
| 34 | None | (g) | 0.2 | (b) | 1.0 | None | (d) | 1.0 | 750 | 2 | 1.0 | 0.0 | 1.0 | 0.0 | 0.0 | 0.35 | 0.7 | Comparative Example |
| 35 | None | (g) | 0.2 | (b) | 1.0 | None | (d) | 1.0 | 400 | 2 | 0.1 | 0.8 | 0.2 | 1.0 | 0.82 | 1.02 | 0.1 | Example |
| 36 | None | (c) | 0.2 | (b) | 1.0 | None | (d) | 1.5 | 500 | 2 | 0.2 | 0.0 | 1.6 | 0.9 | 0.16 | 1.06 | 0.9 | Example |
| 37 | None | None | - | None | - | None | (d) | 1.5 | 400 | 2 | None | 0.0 | 0.0 | 1.5 | 0.0 | 1.5 | 0.0 | Comparative Example |
| 38 | None | None | - | None | - | None | (f) | 1.5 | 750 | 2 | 0.4 | 0.0 | 0.0 | 1.5 | 0.0 | 1.5 | 0.0 | Comparative Example |

**[Table 5]**

| Material No. | Plating condition | | | | | | | | Heating treatment | | Configuration of plating layer and thickness of each layer (µm) | | | | | | Metallic Cr (mg/m²) | |
|---|---|---|---|---|---|---|---|---|---|---|---|---|---|---|---|---|---|---|
| | Treatment to base to base steel sheet | Base plating | | Cu plating | | Intermediate treatment | Ni plating | | Temperature (°C) | Time (min) | FeNi FeCuNi | Cu | CuNi | Ni | Cu₈₀Ni₂₀ to Cu₁₀₀ | Cu₆₃N₃₇ to Cu₈₀N₂₀ | | |
| | | Type | Thickness (µm) | Type | Thickness (µm) | | Type | Thickness (µm) | | | | | | | | | | |
| 39 | one | None | - | (a) | 1.0 | Boric acid | (d) | 1.0 | 400 | 2 | None | 0.7 | 0.4 | 0.9 | 0.78 | 0.1 | 7 | Example |
| 40 | | | | | | | | | | | | | | | | | 20 | Example |
| 41 | | | | | | | | | | | | | | | | | 300 | Example |
| 42 | | | | | | | | | | | | | | | | | 2000 | Example |
| 43 | Boric acid | (g) | 0.2 | (b) | 1.0 | Boric acid | (d) | 1.0 | 500 | 2 | 0.2 | 0.2 | 1.2 | 0.6 | 0.44 | 0.3 | 7 | Example |
| 44 | | | | | | | | | | | | | | | | | 500 | Example |
| 45 | | | | | | | | | | | | | | | | | 3000 | Example |
| 46 | None | None | - | (a) | 1.0 | Boric acid | (e) | 4.0 | 520 | 2 | None | 0.0 | 1.3 | 2.7 | 0.0 | 0.0 | 6 | Example |
| 47 | | | | | | | | | | | | | | | | | 30 | Example |
| 48 | | | | | | | | | | | | | | | | | 300 | Example |
| 49 | None | None | - | (a) | 1.0 | None | (d) | 2.0 | 530 | 1.7 | None | 0.0 | 1.9 | 1.1 | 0.0 | 1.0 | 3 | Example |
| 50 | | | | | | | | | | | | | | | | | 1100 | Example |
| 51 | None | None | - | (a) | 1.5 | Boric acid | (d) | 1.8 | 500 | 2 | None | 0.0 | 1.9 | 1.4 | 0.38 | 0.6 | 7 | Example |
| 52 | | | | | | | | | | | | | | | | | 100 | Example |
| 53 | Boric | (g) | 0.4 55 | (b) | 2.0 | Boric | (d) | 0.7 | 650 | 0.4 | 0.2 | 0.0 | 2.1 | 0.5 | 0.95 | 0.4 | 7 | Example |
| 54 | | | | | | | | | | | | | | | | | 20 | Example |
| | | | | | | | | | | | | | | | | | 100 | Example |
| 56 | None | (g) | 0.2 | (b) | 2.0 | Boric acid | (d) | 1.0 | 500 | 2 | 0.15 | 1.0 | 1.2 | 0.6 | 1.24 | 0.2 | 7 | Example |
| 57 | | | | | | | | | | | | | | | | | 50 | Example |

**[Table 6]**

| Material No. | Plating condition | | | | | | | | Heating treatment | | Configuration of plating layer and thickness of each layer (µm) | | | | | | Metallic Cr (mg/m²) | |
|---|---|---|---|---|---|---|---|---|---|---|---|---|---|---|---|---|---|---|
| | Treatment to base steel sheet | Base plating | | Cu plating | | Intermediate treatment | Ni plating | | Temperature (°C) | Time(min) | FeNi FeCuNi | Cu | CuNi | Ni | Cu₈₀Ni₂₀ to Cu₁₀₀ | Cu₆₃Ni₃₇ to Cu₈₀Ni₂₀ | | |
| | | Type | Thickness (µm) | Type | Thickness (µm) | | Type | Thickness (µm) | | | | | | | | | | |
| | None | (c) | 0.2 | (b) | 3.0 | Boric acid | (d) | 4.0 | 500 | 2 | None | 2.2 | 1.2 | 3.6 | 2.44 | 0.4 | 20 | Example |
| 58 59 | | | | | | | | | | | | | | | | | 20 100 | Example |
| 60 | None | (c) | 0.2 | (b) | 4.0 | Boric acid | (d) | 3.0 | 500 | 2 | None | 3.2 | 1.2 | 2.6 | 3.44 | 0.4 | 20 | Example |
| 61 | | | | | | | | | | | | | | | | | 100 | Example |
| 62 | Boric | (g) | 0.4 | (b) | 1.5 | Boric acid | (d) | 0.7 | 650 | 0.4 | 0.3 | 0.0 | 1.7 | 0.4 | 0.66 | 0.5 | 20 | Example |
| 63 | | | | | | | | | | | | | | | | | 100 | Example |
| 64 | | | | | | | | | | | | | | | | | 300 | Example |
| 65 | Boric acid | (g) | 0.4 | (b) | 2.0 | Boric acid | (d) | 0.7 | 650 | 0.4 | 0.2 | 0.0 | 2.1 | 0.5 | 0.95 | 0.4 | 300 | Example |
| 66 | None | (g) | 0.3 | (b) | 2.0 | Boric acid | (e) | 2.0 | 650 | 0.4 | 0.3 | 0.0 | 2.6 | 1.3 | 1.02 | 0.7 | 20 | Example |
| 67 | | | | | | | | | | | | | | | | | 100 | Example |
| 68 | | | | | | | | | | | | | | | | | 300 | Example |
| 69 | None | None | - | (a) | 1.5 | Boric acid | (d) | 0.5 | No heating | | None | 1.5 | 0.0 | 0.5 | 1.5 | 0.0 | 300 | Comparative Example |
| 70 | Boric acid | (g) | 0.2 | (b) | 1.0 | Boric acid | (d) | 1.0 | No heating | | None | 1.0 | 0.0 | 1.0 | 1.0 | 0.0 | 300 | Comparative Example |
| 71 | None | None | - | (a) | 1.0 | Boric acid | (d) | 1.0 | 300 | 2 | None | 0.9 | 0.0 | 1.0 | 0.9 | 0.0 | 300 | Comparative Example |
| 72 | None | (g) | 0.2 | (b) | 1.0 | None | (d) | 1.0 | 750 | 2 | 1.0 | 0.0 | 1.0 | 0.0 | 0.0 | 0.7 | 300 | Comparative Example |
| 73 | None | (g) | 0.2 | (b) | 1.0 | None | (d) | 1.0 | 400 | 2 | 0.1 | 0.8 | 0.2 | 1.0 | 0.82 | 0.1 | 100 | Example |
| 74 | None | (c) | 0.2 | (b) | 1.0 | None | (d) | 1.5 | 500 | 2 | 0.2 | 0.0 | 1.6 | 0.9 | 0.16 | 0.9 | 100 | Example |
| 75 | None | None | - | None | - | None | (f) | 1.5 | 750 | 2 | 0.4 | 0.0 | 0.0 | 1.5 | 0.0 | 0.0 | 0 | Comparative Example |
| 76 | None | None | - | None | - | None | (f) | 1.5 | 750 | 2 | 0.4 | 0.0 | 0.0 | 1.5 | 0.0 | 0.0 | 300 | Comparative Example |

With regard to Materials Nos. 1 to 38 (examples of the embodiment of the present invention) shown in Tables 3 and 4, materials for the metal cases, the battery cans, and the batteries (cylindrical batteries) were evaluated using the following methods.

### (1) Evaluation of the adhesiveness of platings

The material for metal cases was punched into a circle with a blank diameter of 90 mm (φ 90), and was formed into a cylindrical can using a punch with a diameter of 45 mm(φ45). A small specimen with a width of 10 mm (in the circumferential direction of the cylindrical can) and a height of 22 mm (in the height direction of the cylindrical can) was cut out from the wall of the formed cylindrical can, and 0T bending was performed at the middle portion of the long side of the small specimen. Using an SEM, the bent portion was observed, and the degree of plating detachment was evaluated based on the following criteria (rating). When there is no plating detachment, the rating is 4. In addition, when the lengths of detached platings are less than 10%, 10% to less than 20%, and more than 20%, the ratings for the metal case materials are 3, 2, and 1, respectively. Meanwhile, in the evaluation of the adhesiveness of platings, the tests were performed 4 times, and the average ratings were obtained. Tables 7 and 8 show the average ratings of the adhesiveness of platings.

### (2) Aging, and charging and discharging in the initial stage

5 batteries from the above 15 were aged with no potential applied at room temperature for 3 days and at 40°C for 4 days, and then a hole was made on each of the battery caps so as to remove the electrolytic solution. The concentration of Fe ions in the electrolytic solution was measured through inductively coupled plasma (ICP) spectroscopy. Furthermore, the amount of Fe dissolved was obtained by averaging 5 measured values of the concentration of Fe ions. Tables 7 and 8 show the amounts of Fe dissolved. In addition, the remaining 10 batteries were aged under the same conditions as the above 5 batteries. After that, the 10 batteries were charged to 4.1 V at an electrical current of 0.3 C (charging rate), were discharged to 2.7 V at an electrical current of 1 C (discharging rate), and then were charged to 3.7 V at an electrical current of 1 C (charging rate). The average value of the discharging capacitance in the initial stage was 2.8 Ah. After that, the batteries were maintained at 25°C for 3 weeks, and the voltages of the batteries were measured, thereby obtaining the difference between the voltage of the first week and the voltage of the third week (the amount of voltage reduced). Tables 7 and 8 show the average values of the amounts of voltage reduced.

### (3) Outer surface corrosion resistance tests

Using the above 10 batteries that finished the voltage measurement, corrosion tests were performed on the outer surfaces of the cans under the following cycle conditions. That is, the batteries were maintained at -20°C for 2 hours, were exposed for 4 hours at 60°C under a relative humidity of 95%rh, and then were maintained for 2 hours at 25°C. Since the above 8 hours forms one cycle, three cycles of the corrosion tests were performed each day.
90 cycles of the corrosion tests were performed, and the number of point-like red rusts (pitting corrosion) generated on the outer surface of each of the can was measured. Table 3 shows the average value of the pitting corrosions.

The results of performance evaluation are shown in Tables 7 and 8.

**[Table 7]**

| Material No. | Adhesiveness of plating (rating) | Properties of inner surface of cans | | Number of pitting corrosions of outer surface of cans -() | |
|---|---|---|---|---|---|
| | | Amount of Fe dissolved (ppm) | Reduced voltage (mV) | | |
| 1 | 3 | 19 | 26.9 | 4.7 | Example |
| 2 | 3 | 17 | 26.7 | 4.4 | Example |
| 3 | 3 | 12 | 26.2 | 3.3 | Example |
| 4 | 3 | 11 | 26.1 | 3.2 | Example |
| 5 | 3 | 8 | 25.8 | 2.6 | Example |
| 6 | 3 | 19 | 26.9 | 4.9 | Example |
| 7 | 3 | 12 | 26.2 | 3.4 | Example |
| 8 | 3 | 26 | 28.0 | 7.5 | Example |
| 9 | 3 | 17 | 26.7 | 4.5 | Example |
| 10 | 3 | 11 | 26.1 | 3.3 | Example |
| 11 | 4 | 18 | 26.2 | 4.2 | Example |
| 12 | 4 | 13 | 26.1 | 3.1 | Example |
| 13 | 4 | 10 | 25.9 | 2.7 | Example |
| 14 | 4 | 15 | 26.5 | 4.0 | Example |
| 15 | 4 | 13 | 26.3 | 3.6 | Example |
| 16 | 4 | 12 | 26.2 | 3.5 | Example |
| 17 | 3.5 | 14 | 26.4 | 3.9 | Example |
| 18 | 3.5 | 13 | 26.3 | 3.5 | Example |
| 19 | 3.5 | 20 | 26.4 | 4.6 | Example |

**[Table 8]**

| Material No. | Adhesiveness of plating (rating) | Properties of inner surface of cans | | Number of pitting corrosions of outer surface of cans -() | |
|---|---|---|---|---|---|
| | | Amount of Fe dissolved (ppm) | Reduced voltage (mV) | | |
| 20 | 3 | 22 | 27.2 | 5.3 | Example |
| 21 | 3 | 23 | 27.3 | 5.5 | Example |
| 22 | 3 | 13 | 26.3 | 3.5 | Example |
| 23 | 3 | 10 | 26.0 | 3.1 | Example |
| 24 | 3 | 7 | 25.7 | 2.4 | Example |
| 25 | 3 | 7 | 25.7 | 2.4 | Example |
| 26 | 4 | 13 | 25.9 | 3.1 | Example |
| 27 | 4 | 10 | 25.8 | 3.2 | Example |
| 28 | 4 | 8 | 25.4 | 2.4 | Example |
| 29 | 3 | 29 | 28.8 | 9.5 | Example |
| 30 | 3.5 | 22 | 27.8 | 6.3 | Example |
| 31 | 2 | 111 | 31.1 | 23.2 | Comparative Example |
| 32 | 2 | 119 | 31.9 | 24.8 | Comparative Example |
| 33 | 2.5 | 115 | 31.5 | 24.0 | Comparative Example |
| 34 | 2 | 100 | 30.0 | 21.0 | Comparative Example |
| 35 | 3 | 84 | 28.4 | 17.7 | Example |
| 36 | 3 | 84 | 28.4 | 17.8 | Example |
| 37 | 2 | 650 | 85.0 | 131.0 | Comparative Example |
| 38 | 4 | 310 | 51.0 | 63.0 | Comparative Example |

In comparison to steel sheets having a single Ni-plated layer (Comparative Examples using Materials Nos. 37 and 38) and steel sheets having a plurality of Cu- and Ni-plated layers for which no thermal treatment was performed (Comparative Examples using Materials Nos. 31 and 32) in the conventional technique, in Examples, the adhesiveness of plating is high, and the amount of Fe dissolved during the aging and the reduction of voltage after the charging and discharging test are markedly small. In addition, in comparison to double layers of Cu and Ni platings which were heated under heating conditions different from those of the present invention (Comparative Examples using Materials Nos. 33 and 34), in Examples, the amount of Fe dissolved during the aging and the reduction of voltage after the charging and discharging test are markedly small. Furthermore, in comparison to the above Comparative Examples, in Examples, the corrosion resistance of the outer surface of the battery cans is significantly excellent. As such, the plated layers in Examples are resistant to damage during the forming of battery cans, and have small areas on which Fe is exposed both on the inner and outer surfaces of the cans. In addition, Examples for which the boron acid immersion treatment was performed between the Cu plating and the Ni plating (for example, Examples using Materials Nos. 21 and 22) show superior performance compared to Examples for which the boron acid immersion treatment was not performed (for example, Examples using Materials Nos. 35 and 36).

Furthermore, with regard to Materials Nos. 39 to 76 shown in Tables 5 and 6 (modified examples of the embodiment of the present invention), the materials for metal cases, the battery cans, and the batteries (the cylindrical batteries and the rectangular batteries) were evaluated using the following methods.

### (4) Measurement of the dissolution potentials of the inner surfaces of cans

The cylindrical battery can was cut open, and a small specimen having a width of 30 mm (in the circumferential direction of the cylindrical can) and a height of 40 mm (in the height direction of the cylindrical can) was cut out from the wall of the can, and an aluminum tab was welded on the short side of the small specimen. After that, a portion having a width of 10 mm and a height of 10 mm was removed from the center of the small specimen, and the front and back surfaces of the small specimen were sealed using a seal tape. A three electrode-type laminate cell having the small specimen as the working electrode was assembled in a glove box based on Non-Patent Citation 3. Meanwhile, the counter electrode and the reference electrode of the laminate cell were lithium metal, and the working electrode, the counter electrode, and the reference electrode were separated using separators. In addition, an electrolytic solution of a solution having a mixing ratio of ethylene carbonate: diethylene carbonate = 1:1, to which 1 mol/l of LiPF₆ was added, was used. After the laminate cell was maintained at 40°C, anodic polarization was performed at a scanning rate of 0.5 mV/sec from the open circuit potential to a potential of 4.5 V (vs. Li/Li⁺), and the initial potential where the dissolution of the metal began (dissolution potential) was obtained. Tables 9 and 10 show the dissolution potentials.

### (5) Measurement of the amount of Fe dissolved due to aging

5 cylindrical batteries from the above 15 were aged with no potential applied at room temperature for 3 days and at 40°C for 4 days, and then a hole was made on each of the battery caps so as to remove the electrolytic solution. The concentration of Fe ions in the electrolytic solution was measured through inductively coupled plasma (ICP) spectroscopy. Furthermore, the amount of Fe dissolved was obtained by averaging 5 measured values of the concentration of Fe ions. Tables 9 and 10 show the average values of the amounts of Fe dissolved.

### (6) Measurement of the amounts of Fe and Ni dissolved due to high-pressure charging and discharging

In addition, after the remaining 10 batteries were also aged under the same conditions as the above 5 cylindrical batteries, the following high-pressure charging and discharging cycle tests were performed. That is, after preliminary charging was performed at a cut-off potential (constant voltage) of 4.6 V at a charging rate of 0.05 C (constant electrical current), preliminary discharging was performed at a cut-off potential of 2.8 V at a discharging rate of 0.05 C (constant electrical current). After that, 200 cycles of primary charging and discharging were repeated at 25°C. A cycle of the primary charging and discharging is composed of primary charging performed at a cut-off potential (constant voltage) of 4.2 V at a charging rate of 0.5 C (constant electrical current) and primary discharging performed at a cut-off potential of 2.8 V at a discharging rate of 0.5 C (constant electrical current). After the test, a hole was made on each of the battery caps so as to remove the electrolytic solution, and then the concentrations of Fe ions and Ni ions in the electrolytic solution were measured through the inductively coupled plasma (ICP) spectroscopy. Tables 9 and 10 show the average values of the concentrations of Fe ions and Ni ions.

### (7) Evaluation of long-term durability when battery cans are separated from electrodes

In addition, using the rectangular batteries, the following long-term charging and discharging cycle tests were performed. Alter the completion of the tests, the batteries were disassembled, and the maximum corrosion depths in the inner surfaces of the cans were obtained. That is, 1000 cycles of charging and discharging, for which charging performed at a cut-off potential (constant voltage) of 4.2 V at a charging rate of 1 C (constant electrical current) and discharging performed at a cut-off potential of 2.5 V at a discharging rate of 5 C (constant electrical current) constituted 1 cycle, were repeated at 25°C. Tables 9 and 10 show the average values of the corrosion depths.

The results of performance evaluation are shown in Tables 9 and 10.

**[Table 9]**

| Material No. | Dissolution voltage (V) | Amount of Fe dissolved (ppm) | High-pressure charging and discharging cycle test | | Insulation from electrodes | |
|---|---|---|---|---|---|---|
| | | | Fe (ppm) | Ni (ppm) | Corrosion depth (µm) | |
| 39 | 3.30 | 10 | 286 | 98 | 55 | Example |
| 40 | 3.40 | 0 | 198 | 143 | 43 | Example |
| 41 | 3.95 | 0 | 0 | 22 | 3 | Example |
| 42 | 4.35 | 0 | 0 | 0 | 1 | Example |
| 43 | 3.40 | 0 | 186 | 143 | 40 | Example |
| 44 | 3.80 | 0 | 0 | 36 | 6 | Example |
| 45 | 4.35 | 0 | 0 | 0 | 1 | Example |
| 46 | 3.60 | 0 | 98 | 76 | 17 | Example |
| 47 | 3.70 | 0 | 67 | 44 | 8 | Example |
| 48 | 4.25 | 0 | 0 | 0 | 1 | Example |
| 49 | 3.50 | 0 | 134 | 99 | 29 | Example |
| 50 | 3.80 | 0 | 0 | 38 | 7 | Example |
| 51 | 3.50 | 0 | 127 | 95 | 35 | Example |
| 52 | 3.80 | 0 | 0 | 42 | 6 | Example |
| 53 | 3.80 | 0 | 0 | 38 | 6 | Example |
| 54 | 3.90 | 0 | 0 | 22 | 3 | Example |
| 55 | 4.10 | 0 | 0 | 5 | 1 | Example |
| 56 | 3.50 | 0 | 123 | 98 | 33 | Example |
| 57 | 3.70 | 0 | 65 | 44 | 9 | Example |

**[Table 10]**

| Material No | Dissolution voltage (V) | Amount of Fe dissolved (ppm) | High-pressure charging and discharging cycle test | | Insulation from electrodes | |
|---|---|---|---|---|---|---|
| | | | Fe (ppm) | Ni (ppm) | Corrosion depth (µm) | |
| 58 | 3.60 | 0 | 102 | 76 | 18 | Example |
| 59 | 3.90 | 0 | 0 | 25 | 1 | Example |
| 60 | 3.60 | 0 | 97 | 77 | 17 | Example |
| 61 | 3.90 | 0 | 0 | 25 | 4 | Example |
| 62 | 3.70 | 0 | 67 | 48 | 8 | Example |
| 63 | 4.00 | 0 | 0 | 11 | 2 | Example |
| 64 | 4.35 | 0 | 0 | 0 | 1 | Example |
| 65 | 3.80 | 0 | 0 | 40 | 7 | Example |
| 66 | 3.70 | 0 | 67 | 44 | 9 | Example |
| 67 | 4.00 | 0 | 0 | 9 | 2 | Example |
| 68 | 4.35 | 0 | 0 | 0 | 1 | Example |
| 69 | 3.10 | 84 | 730 | 275 | 118 | Comparative Example |
| 70 | 3.10 | 88 | 785 | 264 | 121 | Comparative Example |
| 71 | 3.10 | 79 | 710 | 282 | 100 | Comparative Example |
| 72 | 3.10 | 81 | 750 | 291 | 108 | Comparative Example |
| 73 | 3.30 | 9 | 285 | 152 | 57 | Example |
| 74 | 3.50 | 0 | 120 | 89 | 33 | Example |
| 75 | 3.00 | 113 | 1015 | 320 | 170 | Comparative Example |
| 76 | 3.10 | 89 | 715 | 270 | 112 | Comparative Example |

In comparison to a Ni-plated steel sheet (Comparative Example using Material No. 75), a steel sheet for which Cr plating was performed on the surface layer of a Ni plating (Comparative Example using Material No. 76), steel sheets for which Cr plating was performed on double layers of Cu and Ni platings for which no thermal treatment were performed (Comparative Examples using Materials Nos. 69 and 70), and steel sheets for which Cr plating was performed on double layers of Cu and Ni platings which were heated under heating conditions different from those of the present invention (Comparative Examples using Materials Nos. 71 and 72) in the conventional technique, in Examples (Examples using Materials Nos. 39 to 68 or 73, and 74), since the dissolution potentials of the inner surface were high after the cans were formed, it was difficult to cause an anode dissolution. In addition, in Examples, the dissolution of Fe ions due to the aging was extremely suppressed, and the amounts of Fe and Ni dissolved due to the high-pressure charging and discharging were also low. Particularly, in Examples having a dissolution potential of 3.8 V or higher, no Fe dissolved, and the amount of Ni dissolved was also extremely small. Even in the evaluation of the long-term durability when the metal cases were insulated from electrodes, materials according to the embodiment of the present invention were considerably superior to materials according to Comparative Examples with corrosion resistance.

### [Industrial Applicability]

Since it is possible to provide a secondary battery with stable quality at a low cost due to the present invention, application of the secondary battery to personal devices and automobiles is increasingly accelerating. In addition, the present invention will contribute to the improvement of the global environment through the distribution of highly efficient mobile devices, hybrid automobiles, and plug-in hybrid automobiles. As a result, the industrial value of the present invention is extremely large.

### [Reference Symbol List]

- 1:: PUNCH
- 2:: DIE
- 3:: BLANK HOLDER
- 4:: STEEL SHEET (IRON SHEET)
- 5:: Cu-Ni LAYER (Cu-Ni DIFFUSION LAYER, LAYER OF Cu-Ni SOLID SOLUTION)
- 6:: Ni LAYER
- 7:: Cu LAYER
- 8:: Fe-Ni LAYER OR Fe-Cu-Ni LAYER
- 9:: Cr LAYER
- 10:: PLATED LAYER

## Claims

1. A material for metal cases of secondary batteries using a non-aqueous electrolyte, the material comprising:
a steel sheet; and
a plated layer that has a Ni layer, and a Cu-Ni layer, which is disposed between the Ni layer and the steel sheet and is in contact with the Ni layer, and is in contact with the steel sheet.

2. The material for metal cases of secondary batteries using a non-aqueous electrolyte according to claim 1,
wherein the plated layer includes areas containing 63 mass% or more of Cu.

3. The material for metal cases of secondary batteries using a non-aqueous electrolyte according to claim 1,
wherein the plated layer includes areas containing 80 mass% or more of Cu.

4. The material for metal cases of secondary batteries using a non-aqueous electrolyte according to claim 3,
wherein a thickness of the areas in the plated layer is 0.25 µm to 4.0 µm.

5. The material for metal cases of secondary batteries using a non-aqueous electrolyte according to claim 1,
wherein the plated layer includes a Cu layer which is disposed between the steel sheet and the Cu-Ni layer and is in contact with the Cu-Ni layer.

6. The material for metal cases of secondary batteries using a non-aqueous electrolyte according to claim 1,
wherein the plated layer includes a Fe-Ni layer or a Fe-Cu-Ni layer which is disposed between the steel sheet and the Cu-Ni layer and is in contact with the steel sheet.

7. The material for metal cases of secondary batteries using a non-aqueous electrolyte according to claim 6,
wherein a thickness of the Fe-Ni layer or the Fe-Cu-Ni layer is 0.2 µm to 1.0 µm.

8. The material for metal cases of secondary batteries using a non-aqueous electrolyte according to claim 1,
wherein the plated layer includes a Cr layer which is in contact with the Ni layer.

9. The material for metal cases of secondary batteries using a non-aqueous electrolyte according to claim 8,
wherein an amount of the Cr layer is 10 mg/m² to 3500 mg/m².

10. The materal for metal cases of secondary batteries using a non-aqueous electrolyte according to claim 1,
wherein the plated layer is in contact with both surfaces of the steel sheet.

11. The material for metal cases of secondary batteries using a non-aqueous electrolyte according to claim 1, wherein a thickness of the Cu-Ni layer is 0.35 µm to 3.0 µm.

12. The material for metal cases of secondary batteries using a non-aqueous electrolyte according to claim 1,
wherein a thickness of the Ni layer is 0.20 µm to 4.0 µm.

13. A metal case of secondary batteries using a non-aqueous electrolyte manufactured using the material for metal cases according to claim 1.

14. A secondary battery using a non-aqueous electrolyte comprising:
the metal case according to claim 13;
a cathode;
an anode;
a separator; and
an electrolytic solution.

15. A producing method of a material for metal cases of secondary batteries using a non-aqueous electrolyte, the method comprising:
(a) a copper plating process in which copper is plated on a steel sheet;
(b) a nickel plating process in which nickel is plated after the copper plating process; and
(c) a thermal treatment process in which heating is performed after the nickel plating process.

16. The producing method of a material for metal cases of secondary batteries using a non-aqueous electrolyte according to claim 15, the method further comprising (d) a strike plating process in which nickel or copper is plated on the steel sheet before the copper plating process.

17. The producing method of a material for metal cases of secondary batteries using a non-aqueous electrolyte according to claim 15, the method further comprising (e) a chromium plating process in which chromium is plated after the thermal treatment process.

18. The producing method of a material for metal cases of secondary batteries using a non-aqueous electrolyte according to claim 17,
wherein an amount of chromium is 10 mg/m² to 3500 mg/m² in the chromium plating process.

19. The producing method of a material for metal cases of secondary batteries using a non-aqueous electrolyte according to claim 15,
wherein a heating temperature is 400°C to 550°C, and a heating time is 0.5 minute to 3 minutes in the thermal treatment process.

20. The producing method of a material for metal cases of secondary batteries using a non-aqueous electrolyte according to claim 15,
wherein a heating temperature is 550°C to 650°C, and a heating time is 0.2 minute to 1 minute in the thermal treatment process.

21. The producing method of a material for metal cases of secondary batteries using a non-aqueous electrolyte according to claim 15,
wherein a copper sulfate bath is used in the copper plating process.
